(19) Europäisches Patentamt
European Patent Office
Office européen des brevets

(11) EP 2 038 337 B1

(12) **EUROPÄISCHE PATENTSCHRIFT**

(45) Veröffentlichungstag und Bekanntmachung des Hinweises auf die Patenterteilung:
**10.03.2010 Patentblatt 2010/10**

(21) Anmeldenummer: **07725657.6**

(22) Anmeldetag: **30.05.2007**

(51) Int Cl.:
***C08K 5/00*** $^{(2006.01)}$ ***C08K 5/17*** $^{(2006.01)}$

(86) Internationale Anmeldenummer:
**PCT/EP2007/004766**

(87) Internationale Veröffentlichungsnummer:
**WO 2008/006422 (17.01.2008 Gazette 2008/03)**

(54) **VERWENDUNG VON LÖSUNGEN AUS METALLSALZEN IN IONISCHEN FLÜSSIGKEITEN ALS ANTISTATIKA FÜR KUNSTSTOFFE**

USE OF SOLUTIONS OF METAL SALTS IN IONIC LIQUIDS AS ANTI-STATIC AGENTS FOR PLASTICS

UTILISATION DE SOLUTIONS À BASE DE SELS MÉTALLIQUES DANS DES LIQUIDES IONIQUES EN TANT QU'ANTISTATIQUES POUR MATIÈRES SYNTHÉTIQUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **11.07.2006 DE 102006031952**

(43) Veröffentlichungstag der Anmeldung:
**25.03.2009 Patentblatt 2009/13**

(60) Teilanmeldung:
**09178284.7 / 2 157 126**

(73) Patentinhaber: **Evonik Goldschmidt GmbH**
**45127 Essen (DE)**

(72) Erfinder:
- **HELL, Kerstin**
**45326 Essen (DE)**
- **HUBEL, Roland**
**45128 Essen (DE)**
- **WEYERSHAUSEN, Bernd**
**45127 Essen (DE)**

(56) Entgegenhaltungen:
**WO-A-2005/021484**

- **DATABASE WPI Section Ch, Week 199850 Derwent Publications Ltd., London, GB; Class A85, AN 1998-589868 XP002397048 & JP 10 265673 A (MITSUBISHI CHEM CORP) 6. Oktober 1998 (1998-10-06)**
- **DATABASE WPI Section Ch, Week 200457 Derwent Publications Ltd., London, GB; Class A17, AN 2004-584511 XP002397049 & JP 2004 217931 A (SANYO CHEM IND LTD) 5. August 2004 (2004-08-05)**
- **DATABASE WPI Section Ch, Week 200512 Derwent Publications Ltd., London, GB; Class A18, AN 2005-105340 XP002397050 & JP 2005 015573 A (MITSUBISHI ENG PLASTICS KK) 20. Januar 2005 (2005-01-20)**
- **DATABASE WPI Section Ch, Week 200640 Derwent Publications Ltd., London, GB; Class A32, AN 2006-385422 XP002397051 & JP 2006 137885 A (TOREKION YG) 1. Juni 2006 (2006-06-01)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 038 337 B1

Printed by Jouve, 75001 PARIS (FR)

## Beschreibung

Gegenstand der Erfindung ist die Verwendung von Lösungen aus Metallsalzen in ionischen Flüssigkeiten als Antistatika für Kunststoffe.

Kunststoffe wie Polyolefine, wie etwa Low Density und High Density Polyethylen, Polypropylen, Polystyrol, Vinylpolymere, Polyamide, Polyester, Polyacetale, Polycarbonate, Polyvinylchloride und insbesondere Polyurethane sind elektrische Isolatoren, auf denen sich bei der Herstellung, Verarbeitung und dem Gebrauch daraus hergestellter Folien und Formteile hohe Oberflächenladungen ansammeln können.

Diese statischen Aufladungen führen zu unerwünschten Effekten und ernsten Gefahrensituationen, welche von der Anziehung von Staub, Haftung von hygienisch bedenklichen verunreinigungen, Zerstörung elektronischer Bauteile durch Funkenüberschläge, physiologisch unangenehmen elektrischen Schlägen, Entzündung brennbarer Flüssigkeiten in Behältern oder Rohren in denen diese gerührt, gegossen oder gefördert werden, bis hin zu Staubexplosionen beispielsweise beim Umfüllen mit Stäuben oder Mehlen gefüllter Großgebinde oder dem Gesteins- bzw. Kohleabbau reichen.

Es besteht daher seit dem Einsatz dieser Kunststoffe die Notwendigkeit, statische Aufladungen zu verhindern oder aber in einem Maße zu minimieren, dass diese nicht mehr gefährlich werden können.

Eine allgemein angewandte Methode, das Ableiten von Ladungen zu ermöglichen und die statische Aufladung zu minimieren, ist der Einsatz von Antistatika, d. h. nichtionischen oder ionischen grenzflächenaktiven Verbindungen und insbesondere Ammonium- und Alkalimetallsalzen.

Heute werden im Wesentlichen äußere und innere Antistatika eingesetzt.

Äußere Antistatika werden als wässrige oder alkoholische Lösungen durch Sprühen, Aufstreichen oder Tauchen und anschließender Lufttrocknung auf die Oberfläche der Kunststoffe aufgetragen. Der verbleibende antistatische Film ist auf fast allen Kunststoffen wirksam, hat aber den Nachteil, dass er durch Reibung oder Flüssigkeit sehr leicht und ungewollt wieder entfernt wird.

Aufgrund des fehlenden Depoteffektes der aus dem Inneren der Polymermasse nachmigrierenden Antistatikamoleküle (wie bei den inneren Antistatika vorhanden), weisen externe Antistatika keine Langzeitwirkung auf.

Daher werden vorzugsweise innere Antistatika verwendet, welche der Polymermasse soweit als möglich in reiner Form, ansonsten in Form so genannter "master-batches", d.h. konzentrierten Formulierungen, vor oder während der Verarbeitung zugesetzt werden und darin während des Injektions- oder Extrusionsprozesses homogen verteilt werden.

Nach heutigen, durch Versuchen belegten Vorstellungen, migrieren die Moleküle aufgrund ihrer bedingten Unverträglichkeit kontinuierlich an die Oberflächen der Polymermassen und reichern sich dort an, bzw. ersetzen Verluste. Der hydrophobe Teil verbleibt dabei im Polymer, der hydrophile Teil bindet in der Atmosphäre befindliches Wasser und bildet eine leitende Schicht, welche Ladungen bereits bei einigen zehn oder hundert Volt und nicht erst bei gefährlichen einigen tausend Volt an die Atmosphäre ableiten kann. Auf diese Weise wird gewährleistet, dass sich über einen längeren Zeitraum eine wirksame Menge Antistatika an der Oberfläche befindet.

Die Migrationsrate (Diffusionsgeschwindigkeit) ist jedoch ein kritischer Faktor:

Ist sie zu groß, können sich (kristalline) Strukturen niedriger Energie ausbilden, welche die Fähigkeit Feuchtigkeit zu binden verlieren und dadurch einmal den Antistatikeffekt deutlich reduzieren und außerdem an der Oberfläche unerwünschte Schmierfilme erzeugen, mit allen damit verbundenen ästhetischen und verarbeitungstechnischen Nachteilen für beispielsweise die Druck-, Verpackungs- oder Lebensmittelindustrie.

Ist die Migrationsrate zu gering, wird keine oder keine in praxisgerechten Zeiten ausreichende Wirkung erzielt.

Es werden daher bereits Kombinationen aus schnell und langsam migrierenden Antistatika eingesetzt, um bei einer ausreichend schnellen Anfangswirkung auch eine über Wochen und Monate anhaltende Langzeitwirkung zu erzielen.

Typische Thermoplaste haben Oberflächenwiderstände im Bereich von $10^{16}$ bis $10^{14}$ Ohm und können daher Spannungen von bis zu 15.000 Volt aufbauen. Wirksame Antistatika sollten daher die Oberflächenwiderstände der Kunststoffe auf $10^{10}$ Ohm oder darunter abbauen können.

Daneben ist noch zu berücksichtigen, dass Antistatika die physikalischen und technischen Polymereigenschaften wie beispielsweise Bedruckbarkeit, Siegelfähigkeit, thermische Stabilität, Formbeständigkeit oder Spannungsrissbeständigkeit beeinflussen können. Insbesondere im Falle von Polyurethanschäumen ist ein Einfluss der Antistatika auf die Zellstruktur und- beschaffenheit und damit auf sämtliche physikalische Eigenschaften in jedem Fall unerwünscht. Zur Minimierung dieser Effekte sollten sie daher bereits in geringen Konzentrationen wirksam werden.

Metallsalze sind bekannte und wirksame Antistatika. Sie haben jedoch den Nachteil, dass sie zur homogenen Verteilung in Kunststoffen vor der Anwendung gelöst werden müssen. Übliche Lösungsmittel sind Alkohole, Ether, Ester, Polyether, cyclische Ether, cyclische Ester, Amide, cyclische Amide, aromatische Verbindungen oder ganz allgemein organische Lösungsmittel.

Die Löslichkeit ist jedoch zum Teil sehr gering, so dass für ausreichend wirksame Einsatzkonzentrationen

große Mengen an Lösungsmittel verwendet werden müssen.

Sofern diese Antistatikaformulierungen in thermoplastischen und auch duroplastischen Kunststoffen eingesetzt werden, haben sie den Nachteil, dass sie die optischen und vor allem die physikalischen Eigenschaften des Endproduktes nachteilig beeinflussen.

In reaktiven Mehrkomponentensystemen, wie beispielsweise bei der Herstellung von Polyurethanen, können gegebenenfalls vorhandene reaktive Gruppen des Lösungsmittels bzw. anderer Bestandteile der Antistatikaformulierungen unerwünscht an der Reaktion teilnehmen und so insbesondere die physikalischen Eigenschaften des Endproduktes verändern. In der Praxis werden daher die Metallsalze vorzugsweise in einem der Formulierungsbestandteile gelöst, bei Polyurethanen ist dies in der Regel die Alkoholkomponente, d.h. in Di- oder Polyolen, die dann mit Di- oder Polyisocyanaten zur Polymermatrix umgesetzt werden. Aufgrund der Vielzahl der einsetzbaren Polyole müßte dann eine entsprechende Vielzahl von Lösungen bereitgestellt werden. Daher werden diese Antistatika/Metallsalze häufig in Lösemitteln gelöst, die Bestandteil sämtlicher Formulierungen sind, wie z.B. Ethylenglykol, Propylenglykol oder aber andere reaktive organische Lösemittel. Nachteilig ist hierbei, dass üblicherweise der Anteil dieser Formulierungsbestandteile, die dann nicht nur als Reaktivkomponente in der Polyurethanformulierung sondern entweder zusätzlich oder auch ausschließlich als Lösungsmittel in der Antistatikformulierung verwendet werden, in der Polyurethanformulierung insgesamt nicht höher sein darf als es ohne den Zusatz der Antistatikformulierung der Fall wäre, um die physikalischen Eigenschaften des Endproduktes möglichst nicht zu verändern.

In der Praxis bestand daher ein Bedarf an einem Lösungsmittel für Metallsalze, welches universell einsetzbar ist und ein hohes Lösungsvermögen für eine Vielzahl von Metallsalzen besitzt und gegenüber den Reaktionskomponenten weitgehend inert ist oder aber auch Bestandteil der Formulierung ist bzw. keinen negativen Einfluss auf die physikalischen Eigenschaften des Endproduktes hat.

Eine Aufgabe der Erfindung war es daher ein Lösungsmittel mit verbesserter Lösungsmittelcharakteristik für Metallsalze zur Verfügung zu stellen, wobei die resultierende Lösung aus Lösungsmittel und Metallsalz - vorteilhafterweise verbesserte - Antistatikeigenschaften in Kunststoffen, insbesondere Polyurethanen, aufweisen soll.

Überraschenderweise wurde nun gefunden, dass bestimmte ionische Flüssigkeiten bessere Lösungsmittel für viele Metallsalze darstellen als die oben angeführten Di- und Polyole. Zur Herstellung von wirksamen Anstistatikaformulierungen sind daher deutlich geringere Mengen an Löungsmittel erforderlich, um einen effektiven Gehalt an Metallsalz zur Verbesserung der Leitfähigkeit in Kunststoffen, insbesondere Polyurethanen, einzubringen.

Überraschenderweise wurde weiterhin gefunden, dass eine Kombination von ionischen Flüssigkeiten und Di- oder Polyolen bzw. deren Mono- oder Dialkylether und -ester, insbesondere Ethylenglykol, Butandiol, Di-, Tri-, Tetraethylen bzw. -propylenglykol, eine synergistische Wirkung hinsichtlich des Lösungsvermögens aufweist.

Überraschenderweise wurde weiterhin gefunden, dass diese synergistische Kombination ihrerseits einen synergistischen Effekt hinsichtlich der Verbesserung der antistatischen Wirkung in insbesondere Polyurethanen hat.

Überraschenderweise wurde weiterhin gefunden, dass die ionischen Flüssigkeiten bereits ohne gelöste Metallsalze eine verbesserte antistatische Wirkung aufweisen.

Ein Gegenstand der Erfindung ist daher die Verwendung von ionischen Flüssigkeiten als Antistatika für Kunststoffe, insbesondere für Polyurethane.

Ein weiterer Gegenstand der Erfindung ist die Verwendung von Lösungen aus Metallsalzen in ionischen Flüssigkeiten als Antistatika für Kunststoffe, insbesondere für Polyurethane.

Ein weiterer Gegenstand der Erfindung ist die Verwendung von Lösungen aus Metallsalzen in synergistischen Mischungen aus ionischen Flüssigkeiten und Mono-, Di- und/oder Polyolen sowie deren Mono- oder Dialkylether und -ester, insbesondere Ethylenglkol, Butandiol, Di-, Tri-, Tetraethylen bzw. -propylenglykol oder auch Mischungen von Mono-, Di- und/oder Polyolen sowie deren Mono- oder Dialkylether und -ester, insbesondere Ethylenglkol, Butandiol, Di-, Tri-, Tetraethylen bzw. -propylenglykol als Antistatika für Kunststoffe, insbesondere Polyurethane.

Weitere Gegenstände der Erfindung sind gekennzeichnet durch die Ansprüche.

Ein bevorzugtes erfindungsgemäßes Verfahren basiert demgemäß auf die Verwendung von ionischen Flüssigkeiten als Lösungsmittel (Compatiblizer) für ionisierbare Metallsalze (Leitsalze), insbesondere Alkalimetallsalze, wobei diesen Mischungen weitere organische Lösungsmittel zugesetzt werden können, um einen möglichst hohen Leitsalzgehalt einzustellen.

Als ionische Flüssigkeiten ("ionic liquids") bezeichnet man allgemein bei niedrigen Temperaturen (< 100 °C) schmelzende Salze, die eine neuartige Klasse von Flüssigkeiten mit nichtmolekularem, ionischem Charakter darstellen. Im Gegensatz zu klassischen Salzschmelzen, die hochschmelzende, hochviskose und sehr korrosive Medien darstellen, sind ionische Flüssigkeiten bereits bei niedrigen Temperaturen flüssig und relativ niedrig viskos (K.R. Seddon J. Chem. Technol. Biotechnol. 1997, 68, 351-356).

Ionische Flüssigkeiten bestehen in den meisten Fällen aus Anionen wie zum Beispiel Halogeniden, Carboxylaten, Phosphaten, Thiocyanat, Isothiocyanat, Dicyanamid, Sulfat, Alkylsulfaten, Sulfonaten, Alkylsulfonaten, Tetrafluoroborat, Hexafluorophosphat oder auch Bis(trifluormethylsulfonyl)imid kombiniert mit zum Beispiel substituierten Ammonium-, Phosphonium-, Pyridinium- oder Imidazolium-Kationen, wobei die vorgenannten Anionen und Kationen eine

kleine Auswahl aus der großen Zahl möglicher Anionen und Kationen darstellen und damit kein Anspruch auf Vollständigkeit erhoben oder gar eine Einschränkung vorgegeben werden soll.

Die erfindungsgemäß mitverwendeten ionischen Flüssigkeiten setzen sich aus mindestens einem quartären Stickstoff und/oder Phosphorverbindung und mindestens einem Anion zusammen und ihr Schmelzpunkt liegt unterhalb ca. + 250 °C, vorzugsweise unterhalb ca. + 150 °C, insbesondere unterhalb ca. + 100 °C. Die Mischungen von IL + Lösungsmittel ist bei Raumtemperatur flüssig.

Die in dem erfindungsgemäßen Verfahren bevorzugt eingesetzten ionischen Flüssigkeiten bestehen aus mindestens einem Kation der allgemeinen Formeln:

$$R^1R^2R^3R^4N^+ \qquad (1)$$

$$R^1R^2N^+{=}CR^3R^4 \qquad (2)$$

$$R^1R^2R^3R^4P^+ \qquad (3)$$

$$R^1R^2P^+{=}CR^3R^4 \qquad (4)$$

in denen

$R^1$, $R^2$, $R^3$, $R^4$ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest, insbesondere $-CH_3$) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß $-(R^5-O)_n-R^6$ bedeuten,

wobei

$R^5$ ein 2 bis 4 Kohlenstoffatome enthaltender linearer oder verzweigter Kohlenwasserstoffrest,

n 1 bis 100, vorzugsweise 2 bis 60, ist und

$R^6$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest $-C(O)-R^7$ mit

$R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Als Kationen kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5-bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (5), (6) und (7) beschreiben, wobei die heterocyclischen Ringe gegebenenfalls auch mehrere Hetereoatome enthalten können

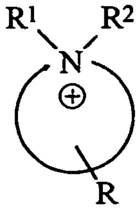 (5) 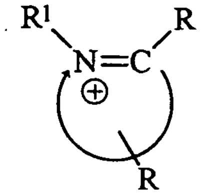 (6) 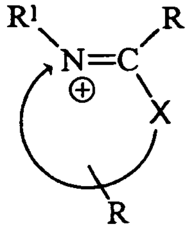 (7)

und worin die Substituenten die folgende Bedeutung haben

R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen.

$R^1$ und $R^2$ besitzen dabei die vorgenannte Bedeutung,

$R^{1a}$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest, insbesondere -$CH_3$) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -($CH_3$)N-C(O)-, -(O)C-N($CH_3$)-, -S($O_2$)-O-, -O-S($O_2$)-, -S($O_2$)-NH-, -NH-S($O_2$)-, -S($O_2$)-N($CH_3$)-, -N($CH_3$)-S($O_2$)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß $-(R^S-O)_n-R^6$ bedeuten,

X ist ein Sauerstoffatom, ein Schwefelatom oder ein substituiertes Stickstoffatom (X = O, S, $NR^{1a}$).

Beispiele für cyclische Stickstoffverbindungen der vorgenannten Art sind Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln (5), (6) und (7) können unsubstituiert (R = H), einfach oder auch mehrfach durch den Rest R substituiert sein, wobei bei einer Mehrfachsubstitution durch R die einzelnen Reste R unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4-bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen aneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, Pyridazin, Pyrimidin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen der allgemeinen Formel (8) haben sich als Bestandteil ionischer Flüssigkeit bewährt.

Als Kationen kommen ferner Ionen in Betracht, welche zwei Stickstoffatome enthalten und durch die allgemeine Formel (8) wiedergegeben sind

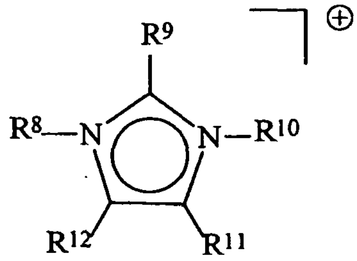

(8)

in denen

$R^8$, $R^9$, $R^{10}$, $R^{11}$, $R^{12}$ gleich oder unterschiedlich sind und Wasserstoff, einen linearen oder verzweigten gegebenenfalls Doppelbindungen enthaltenden aliphatischen Kohlenwasserstoffrest mit 1 bis 30, vorzugsweise 1 bis 8, insbesondere 1 bis 4 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH, $-(CH_3)N-C(O)-$, $-(O)C-N(CH_3)-$,- $S(O_2)-O-$, $-O-S(O_2)-$, $-S(O_2)-NH-$, $-NH-S(O_2)-$, $-S(O_2)-N(CH_3)-$, $-N(CH_3)-S(O_{2)}-$, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', $NH_2$, N(H)R', $N(R')_2$ mit R' gleich einem gegebenenfalls Doppelbindungen enthaltenden $C_1$-$C_{30}$-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus $-(R^5-O)_n-R^6$ bedeuten,
wobei

$R^5$ ein 2 bis 4 Kohlenstoffatome enthaltender Kohlenwasserstoffrest,

n 1 bis 100 ist und

$R^6$ Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest $-C(O)-R^7$ mit
$R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

Die erfindungsgemäß bevorzugt eingesetzten ionischen Flüssigkeiten bestehen aus mindestens einem der vorgenannten Kationen kombiniert mit jeweils einem Anion. Bevorzugte Anionen werden ausgewählt aus der Gruppe - ohne Anspruch auf Vollständigkeit - der Halogenide, Bis(perfluoralkylsulfonyl)amide bzw. -imide wie z.B. Bis(trifluormethylylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat. Weiterhin sind Dicyanamid, Thiocyanat, Isothiocyanat, Tetraphenylborat, Tetrakis(pentafluorphenyl)borat, Tetrafluoroborat, Hexafluorophosphat, Polyetherphosphate und Phosphat bevorzugte Anionen.

Entscheidend ist, dass in der gebrauchsfertigen Mischung, die erfindungsgemäß als Antistatikum in Kunststoffen eingesetzt wird, die Komponenten (IL(s) + Leitsalz(e) + Lösungsmittel) in einer ausreichenden Menge vorhanden sind, so dass die Mischung einen möglichst hohen Anteil an Leitsalz(en) enthält und vorzugsweise bei < 100 °C, besonders bevorzugt bei Raumtemperatur flüssig ist.

Erfingungsgemäß bevorzugt sind solche ionische Flüssigkeiten bzw. deren Mischungen, die eine Kombination eines 1,3-Dialkylimidazolium-, 1,2,3-Trialkylimidazolium-, 1,3-Dialkylimidazolinium- und 1,2,3-Trialkylimidazoliniumkations mit einem Anion ausgesucht aus der Gruppe der Halogenide, Bis(trifluormethylylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat, Hexafluorophosphat darstellen. Darüber hinaus können auch einfache, kommerziell erhältliche, azyklische quarternäre Ammoniumsalze wie z.B. TEGO® IL T16ES, TEGO® IL K5MS oder auch Rezol Heqams (Produkte der Goldschmidt GmbH) eingesetzt werden.

Zur Herstellung der synergistisch wirkenden Kombinationen werden neben den ionischen Flüssigkeiten insbesondere Diole ausgewählt aus der Gruppe Ethylen-, Propylen-, Butylen-, Diethylen-, Triethylen-, Tetraethylen-, Dipropylen-, Tripropylen-, Tetrapropylenglycol sowie die entsprechenden Mono- und Dialkylether eingesetzt.

Bevorzugte synergistische Kombinationen bestehen aus mindestens einer oder mehreren ionischen Flüssigkeiten ausgesucht aus der Gruppe der 1,3-Dialkylimidazolium- bzw. der 1,3-Dialkylimidazoliniumsalze und einem oder mehreren Di- und oder Polyolen ausgesucht aus der Gruppe Ethylenglycol, Propylenglycol, Polyetherole sowie einem Alkalimetallsalz.

Erfingungsgemäß besonders bevorzugt sind Kombinationen aus mindestens einer ionischen Flüssigkeit und mindestens einem Diol ausgesucht aus der Gruppe Ethylenglykol, Diethylenglykol und Butandiol.

Das Mischungsverhältnis von ionischer Flüssigkeit zu der Alkoholkomponente ist innerhalb relativ weiter Grenzen variierbar und wird sowohl durch die Struktur der beiden Komponenten als auch durch das mitverwendete Leitsalz beeinflusst. Da aber aus den genannten Gründen der Fremdanteil in den Kunststoffen möglichst gering gehalten werden soll, wird der Anteil der Alkoholkomponente möglichst im unteren Bereich gehalten mit dem gerade noch eine synergistische Wirkung erzielt werden kann.

Im Allgemeinen werden mit ternären Mischungen sichere Ergebnisse erzielt bei einem Mischungsverhältnis von ionischer Flüssigkeit zu der Alkoholkomponente im Bereich von etwa 1 : 10 bis 10 : 1. In einer solchen Mischung sollte das Alkalimetallsalz mit einem Anteil von 0,1 bis 75 Gewichts-%, vorzugsweise mit einem Anteil von 0,5 bis 50 Gewichts-%, besonders bevorzugt mit einem Anteil von 5 bis 30 Gewichts-% enthalten sein.

Die erfindungsgemäß mitverwendeten Salze sind die auf diesem Gebiet üblicherweise verwendeten einfachen oder komplexen Verbindungen wie beispielsweise insbesondere Alkalimetallsalze der Anionen: Bis(perfluoralkylsulfonyl) amid bzw. -imid wie z.B. Bis(trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat, vorzugsweise Anionen der Verbindungen Thiocyanat, Isothiocyanat, Dicyanamid, Tetraphenylborat, Tetrakis(pentafluorphenyl)borat, Tetrafluoroborat, Hexafluorophosphat, Phosphat und Polyetherphosphate.

Bevorzugte Mischungen sind insbesondere solche, die als Alkalimetallsalz NaSCN bzw. $NaN(CN)_2$ und $KPF_6$ und ein Imidazolinium- bzw. Imidazoliumsalz, vorzugsweise 1-Ethyl-3-methylimidazoliumethylsulfat (EMIM ES) als IL enthalten, wie EMIM ES/$NaN(CN)_2$ oder EMIM ES/$NaN(CN)_2$/EG.

Darstellung erfindungsgemäßer Beispiele:

Eingesetzte Materialien:

| | |
|---|---|
| $KPF_6$ | Kaliumhexafluorophosphat |
| $NaN(CN)_2$ | Natriumdicyanamid |
| NaSCN | Natriumthiocyanat |
| KSCN | Kaliumthiocyanat |
| LiBTA | Lithium-bis(trifluormethylsulfonyl)imid |
| EG | Ethylenglycol |
| EP-S 89 | 7 % $KPF_6$ in Ethylenglycol |

Ionische Flüssigkeiten (IL)

| | |
|---|---|
| TEGO® IL T16ES | Ethyl-bis(polyethoxyethanol)-talgalkylammoniumethylsulfat |
| BMIM TC | 1-Butyl-3-methylimidazoliumthiocyanat |

(fortgesetzt)

| | |
|---|---|
| EMIM BR | 1-Ethyl-3-methylimidazoliumbromid |
| MMIM MS | 1,3-Dimethylimidazoliummethylsulfat |
| EMIM ES | 1-Ethyl-3-methylimidazoliumethylsulfat |

Eingesetztes Equipment:

Die synergistische Mischung von ionischer Flüssigkeit, Leitsalz und organischem Lösungsmittel wurden mittels einfacher Magnetrührer im Labor hergestellt. Gerührt wird so lange bis eine klare Lösung erhalten wird.

Darstellung der Mischungen:

Für die Darstellung erfindungsgemäßer Formulierungen werden die einzelnen Rezepturbestandteile bei Raumtemperatur oder zum Teil auch bei erhöhter Temperatur wenn nötig aufgeschmolzen, abgemischt und gut verrührt bis eine klare Lösung entsteht. Gegebenenfalls muss die Lösung vor dem Gebrauch etwas erwärmt werden.

Herstellung der Polyurethan-Prüfkörper:

Um ein Additiv/eine Additivabmischung auf antistatische Wirkung zu prüfen, wird ein Prüfkörper nach folgender Rezeptur aus Polyurethan hergestellt:

Einwaage:

| | | |
|---|---|---|
| 1) | Desmodur® 2001 KS (Polyol OHZ=56) | 100 Teile |
| 2) | Ethylenglycol (EG) | 12 Teile |
| 3) | Wasser (VE) | 1 Teile |
| 4) | Triethylendiamin (TEDA) 25 %ig in Ethylenglycol | 1,6 Teile |
| 5) | Tegostab® B 8951 | 0,6 Teile |
| 6) | Antistatikum variabel | |
| 7) | Desmodur® PM 53 W (Isocyanatgehalt 19 %) | 140,3 Teile |

Die im Antistatikum enthaltene Menge Ethylenglykol wird in der Berechnung der Formulierung mit berücksichtigt. Die Isocyanatmenge wird entsprechend der OH-Zahl des Antistatikums angepasst.

Durchführung:

1 bis 6 werden zusammen in einen Pappbecher eingewogen und 1 min bei 1.000 U/min herrührt. Desmodur® 2001 KS und Desmodur® PM 53 W werden auf 40 °C vorgewärmt. Anschließend wird das Isocyanat (7) zugegeben und 7 sek. bei 2.500 U/min geführt. Der Inhalt des Bechers wird nun innerhalb von 8 bis 9 Sekunden komplett in eine auf 50 °C temperierte Form (20 cm x 10 cm x 4 cm) gegossen, welche im Anschluss daran sofort verschlossen wird. Die Form wurde vorher mit einem handelsüblichen Trennmittel für Polyurethanschäume eingesprüht. Nach 5 Minuten wird der Probekörper aus der Form befreit und mit trockenem Putzpapier kurz abgewischt.

Messung des Oberflächenwiderstandes (Messspannung 100 V):

Alle Prüfkörper werden bei Normklima (23 °C, 50 % Luftfeuchtigkeit) gelagert. 72 Stunden nach der Herstellung werden die Prüfkörper auf ihren Oberflächenwiderstand mittels Widerstandsmessgerät (Hochohm - Messgerät HM 307 der Firma Fetronic GmbH) untersucht. Der Oberflächenwiderstand des Prüfkörpers wird je dreimal an der Oberseite und dreimal an der Unterseite gemessen. Aus diesen Werten wird der Mittelwert gebildet. Anschließend wird der Prüfkörper in zwei Teile geschnitten. (Dicke a: 2,7 cm, Dicke b: 1,2 cm). Es wird nun je dreimal der Oberflächenwiderstand auf den Schnittflächen gemessen und jeweils der Mittelwert gebildet. Die gemessenen und direkt am Gerät abgelesenen

Werte werden in Ohm [Ω] angegeben. Der Blindwert (Prüfkörper ohne Antistatikum) wird jeweils vor einer zugehörigen Messreihe neu bestimmt.

Aus dem Quotienten des Widerstandes (Mittelwert; siehe oben) des Prüfkörpers ohne Antistatikum (Blindwert) und des Widerstandes des jeweiligen Prüfkörpers mit Antistatikum ergibt sich der Verbesserungsfaktor (VbF) als Mittelwert der jeweils drei (ganzer Block, 2,7 cm Block und 1,2 cm Block) erhaltenen Werte.

Der relative Verbesserungsfaktor ($VbF_{rel}$) ist definiert als:

$$VbF_{rel} = \frac{\text{Verbesserungsfaktor}}{\text{(Anteile Alkalimetallsalz/0,1)}}$$

Der Anteil des Alkalimetallsalzes an der Gesamtformulierung (siehe Spalte 4 in den Tabellen 1 bis 13) errechnet sich aus dem Produkt des Gewichtsanteils des Alkalimetallsalzes im Antistatikum (siehe Spalte 2 in den Tabellen 1 bis 13) und der Einsatzmenge (Anteile) des Antistatikums (siehe Spalte 3 in den Tabellen 1 bis 13). Damit gibt der relative Verbesserungsfaktor die Wirksamkeit der anorganischen Aktivkomponente (Alkalimetallsalz) pro 0,1 Anteile Alkalimetallsalz bei Zugabe von 2, 4, 6 und 8 Anteilen Antistatikformulierungen wieder.

Kombinationen:

Erfindung: IL + Metallsalz sowie IL + Diol + Metallsalz
Vergleich: Diol + Metallsalz (EP-S 89 und 2° NT)

Tabelle 1:
3° ND = äquimolar $NaN(CN)_2$/EMIM ES + gleicher Massenanteil EG
Tabelle 2:
3° NT = äquimolar NaSCN/EMIM ES + gleicher Massenanteil EG
Tabelle 3:
2° NT = maximale Konzentration (35 %) von NaSCN in EG
Tabelle 4:
EP-S 89 = 7 % $KPF_6$ in EG
Tabelle 5:
Ternäre Mischungen (MMIM MS/EG/LiBTA)
Tabelle 6:
Ternäre Mischungen (MMIM MS/EG/verschiedene Leitsalze)
Tabelle 7:
Ternäre Mischungen (EMIM ES/EG/verschiedene Leitsalze)
Tabelle 8:
Ternäre Mischungen (verschiedene ILs/EG/$KPF_6$)
Tabelle 9:
Binäre Mischung (BMIM BR/LiBTA)
Tabelle 10:
Ternäre Mischung = äquimolar $KPF_6$/MMIM ES + gleicher Massenanteil EG
Tabelle 11:
Reine IL BMIM TC
Tabelle 12:
Maximaler Gehalt an Leitsalz in IL (EMIM ES)
Tabelle 13:
Maximaler Gehalt verschiedener Leitsalze in ternären Mischungen (EG/EMIM ES/Leitsalz)

Ergebnisse:

Tabelle 1:

| 3° ND = äquimolar $NaN(CN)_2$/EMIM ES + gleicher Massenanteil EG | | | | | | | | |
|---|---|---|---|---|---|---|---|---|
| **Vers.-Nr.** | **Antistatikums 3° ND** | **Teile Antistatikum** | **entspricht Teile Salz** | **[Ω] ganzer Block øaus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | Blindwert | - | - | 4,58E+11 | 8.17E+11 | 6,17E+11 | | |
| 1 | 21,8g EMIM ES; 30.0g EG; 8,2g $NaN(CN)_2$ (13,6%) | 2 | 0.273 | 4,77E+09 | 5,67E+09 | 3,53E+09 | | |
| | | | | 9,62E+01 | 1,44E+02 | 1,75E+02 | **138** | **51** |
| 2 | 21,8g EMIM ES; 30.0g EG; 8,2g $NaN(CN)_2$ (13,6%) | 4 | 0,544 | 2,15E+09 | 2,25E+09 | 1,52E+09 | | |
| | | | | 2,13E+02 | 3,63E+02 | 4,07E+02 | **328** | **60** |
| 3 | 21,8g EMIM ES; 30.0g EG; 8,2g $NaN(CN)_2$ (13,6%) | 6 | 0,82 | 1,01E+09 | 1,02E+09 | 5,67E+08 | | |
| | | | | 4,54E+02 | 8,03E+02 | 1,09E+03 | **782** | **95** |
| 4 | 21,8g EMIM ES; 30.0g EG; 8,2g $NaN(CN)_2$ (13,6%) | 8 | 1,09 | 4,38E+08 | 3,83E+08 | 2,30E+08 | | |
| | | | | 1,05E+03 | 2,13E+03 | 2,68E+03 | **1952** | **180** |

Je mehr Anteile von der ternären Mischung EMIM ES/EG/$NaN(CN)_2$ in der PU-Formulierung eingesetzt werden, desto größer ist der Verbesserungsfaktor! Synergistischer Effekt. Exponentieller Anstieg der Leitfähigkeit.

Tabelle 2:

| 3° NT = äquimolar NaSCN/EMIM ES + gleicher Massenanteil EG | | | | | | | | |
|---|---|---|---|---|---|---|---|---|
| **Vers.- Nr.** | **Antistatikum 3° NT** | **Teile Antistatikum** | **ent spricht Teile Salz** | **[Ω] ganzer Block ø aus 6 Messungen** | **[Ω] 2,7 cm Schnitt ø aus 3 Messungen** | **[Ω] 1.2cm Schnitt ø aus 3 Messungen** | **VbF** | **$VbF_{rel}$** |
| | Blindwert | - | - | 4,58E+11 | 8,17E+11 | 6,17E+11 | | |
| 5 | 22,3g EMIM ES; 30.0g EG; 7,7g NaSCN (12.8%) | 2 | 0,265 | 1,90E+10 | 6.77E+09 | 3,60E+09 | | |
| | | | | 2,42E+01 | 1,21E+02 | 1,71E+02 | **105** | **40** |
| 5a | 30g EMIM ES; 30.0g EG | 2 | 0 | 2,20E+10 | 7,77E+09 | 4,20E+09 | | |
| | | | | 2,09E+01 | 1,05E+02 | 1,47E+02 | **91** | |
| 6 | 22,3g EMIM ES; 30,0g EG; 7,7g NaSCN (12.8%) | 4 | 0,53 | 2,78E+09 | 2,57E+09 | 1,53E+09 | | |
| | | | | 1,65E+02 | 3,18E+02 | 4,02E+02 | **295** | **56** |
| 6a | 30g EMIM ES; 30.0g EG | 4 | 0 | 3,18E+09 | 2,77E+09 | 2,33E+09 | | |
| | | | | 1,44E+02 | 2,95E+02 | 2,64E+02 | **234** | |
| 7 | 22,3g EMIM ES; 30,0g EG; 7.7g NaSCN (12.8%) | 6 | 0,8 | 1,16E+09 | 1,02E+09 | 7,23E+08 | | |
| | | | | 3,95E+02 | 8,03E+02 | 8,53E+02 | **684** | **86** |
| 8 | 22,3g EMIM ES; 30.0g EG; 7,7g NaSCN (12.8%) | 8 | 1,06 | 5,17E+08 | 4,47E+08 | 2,20E+08 | | |

(fortgesetzt)

| 3° NT = äquimolar NaSCN/EMIM ES + gleicher Massenanteil EG | | | | | | | | |
|---|---|---|---|---|---|---|---|---|
| **Vers.- Nr.** | **Antistatikum 3° NT** | **Teile Antistatikum** | **ent spricht Teile Salz** | **[Ω] ganzer Block ø aus 6 Messungen** | **[Ω] 2,7 cm Schnitt ø aus 3 Messungen** | **[Ω] 1.2cm Schnitt ø aus 3 Messungen** | **VbF** | **$VbF_{rel}$** |
| | | | | 8,87E+02 | 1,83E+03 | 2,80E+03 | **1839** | **173** |

Je mehr Anteile von der ternären Mischung EMIM ES/EG/NaSCN in der PU-Formulierung eingesetzt werden, desto größer ist der Verbesserungsfaktor! Synergistischer Effekt. Exponentieller Anstieg der Leitfähigkeit.

Tabelle 3:

| 2° NT = maximale Konzentration von NaSCN in EG | | | | | | | | |
|---|---|---|---|---|---|---|---|---|
| **Vers.- Nr.** | **Antistatikum 2° NT** | **Teile Antistatikum** | **ent spricht Teile Salz** | **[Ω] ganzer Block ø aus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | Blindwert | - | - | 4.58E+11 | 8.17E+11 | 6,17E+11 | | |
| 9 | 50g EG<br>27g NaSCN<br>(35 Gew.-%) | 2 | 0,7 | 8,70E+09 | 6,53E+09 | 5,73E+09 | | |
| | | | | 5,27E+01 | 1,25E+02 | 1,08E+02 | **95** | **14** |
| 10 | 50g EG<br>27g NaSCN<br>(35 Gew.-%) | 4 | 1,4 | 2,13E+09 | 8,27E+09 | 1,40E+09 | | |
| | | | | 2,15E+02 | 9,88E+01 | 4,40E+02 | **251** | **18** |
| 11 | 50g EG<br>27g NaSCN<br>(35 Gew.-%) | 6 | 2,1 | 7,00E | 6,10E+08 | 4,97E+08 | | |
| | | | | 6,55E+02 | 1,34E+03 | 1,24E+03 | **1078** | **51** |
| 12 | 50g EG<br>27g NaSCN<br>(35 Gew.-%) | 8 | 2,8 | 2,43E+08 | 2,70E+08 | 1,77E+08 | | |
| | | | | 1,89E+03 | 3,02E+03 | 3,49E+03 | **2802** | **100** |

Der Verbesserungseffekt pro 0,1 Anteile Salz in der PU-Formulierung ist geringer als in dem Falle einer ternären Mischung mit einer ionischen Flüssigkeit/EG/Alkalimetallsalz.

Tabelle 4:

| EP-S 89 = 7 % $KPF_6$ in EG | | | | | | | | |
|---|---|---|---|---|---|---|---|---|
| **Vers.- Nr.** | **Antistatikum E-PS 89** | **Teile Antistatikum** | **entspricht Teile ø aus Salz** | **[Ω] ganzer Block 6 Messungen** | **[Ω] 2,7 cm Schnitt ø aus 3 Messungen** | **[Ω 1,2 cm Schnitt ø aus 3 Messungen** | **VbF** | **$VbF_{rel}$** |
| | Blindwert | - | - | 4.58E+11 | 8,17E+11 | 6,17E+11 | | |
| 13 | 7 % $KPF_6$ in EG | 2,86 | 0,2 | 1,22E+10 | 1,20E+10 | 7,80E+09 | | |
| | | | | 3,77E+01 | 6,81E+01 | 7,91 E+01 | **62** | **31** |
| 14 | 7 % $KPF_6$ in EG | 3,77 | 0.264 | 9,22E+09 | 9,03E+09 | 6.00E+09 | | |
| | | | | 4,97E+01 | 9,04E+01 | 1,03E+02 | **81** | **31** |
| 15 | 7 % $KPF_6$ in EG | 5,7 | 0,4 | 5,83E+09 | 8,67E+09 | 6,33E+09 | | |
| | | | | 7,86E+01 | 9,42E+01 | 9,74E+01 | **90** | **23** |
| 16 | 7 % $KPF_6$ in EG | 7,4 | 0,5 | 6,04E+09 | 7,50E+09 | 4,27E+09 | | |
| | | | | 7,59E+01 | 1,09E+02 | 1,45E+02 | **110** | **22** |

Der Verbesserungsfaktor wird kleiner; je mehr eingesetzt wird, umso geringer fällt der Leitfähigkeitszuwachs aus; Zusätzlich ist der Verbesserungsfaktor pro 0,1 Anteile Alkalimetallsalz deutlich kleiner als im Falle einer ternären Mischung unter Verwendung einer ionischen Flüssigkeit.

Die Ergebnisse aus den Tabellen 1 bis 4 sind in den Abbildungen 1 und 2 graphisch dargestellt:

Bei der Darstellung in Abbildung 3 wird die Limitierung, der man bei Verwendung von EP-S 89 unterworfen ist, besonders deutlich. Für den hier maximal erreichten absoluten Verbesserungsfaktor von 110 mussten 8 Anteile der Antistatikformulierung zur PU-Formulierung gegeben werden, womit aber nur 0,5 Anteile Alkalimetallsalz in das System inkorporiert werden. Im Falle der beiden ternären Mischungen 3° ND und 3° NT inkorporiert man durch Zugabe von 8 Anteilen Antistatikformulierung bereits 1,09 bzw. 1,06 Anteile Alkalimetallsalz in die PU-Formulierung. Überraschend ist hierbei, dass ein synergistischer Effekt auftritt, da der Verbesserungsfaktor pro 0,1 Anteile Alkalimetallsalz exponentiell zunimmt.

In Abbildung 3 ist die Veränderung des relativen Verbesserungsfaktors in Abhängigkeit von der Menge (Anteile) zu gegebener Antistatikformulierung dargestellt. Während im Falle von Mischungen mit ionischen Flüssigkeiten der relative Verbesserungsfaktor mit zunehmender Menge Antistatikformulierung größer wird, nimmt er bei Verwendung von Mischung EP-S 89, die keine ionische Flüssigkeit enthält, sogar ab.

1. Je mehr Anteile der ternären Mischung 3° ND und 3° NT in der PU-Formulierung eingesetzt werden, desto größer ist der Verbesserungsfaktor! Synergistischer Effekt. Exponentieller Anstieg der Leitfähigkeit.

2. Im Falle der binären Mischung 2° NT ist der Verbesserungseffekt pro 0,1 Anteile Salz in der PU-Formulierung geringer als in dem Falle einer ternären Mischung {IL/EG/Alkalimetallsalz}.

3. Für EP-S 89 wird der relative Verbesserungsfaktor mit zunehmenden Anteil Antistatikum an der Gesamtformulierung kleiner. D. h. je mehr eingesetzt wird, umso geringer fällt der Leitfähigkeitszuwachs aus. Dies ist gleichbedeutend mit einem Sättigungseffekt. Die Erhöhung der Leitfähigkeit ist nicht direkt proportional zur Einsatzmenge. Zusätzlich ist der relative Verbesserungsfaktor pro 0,1 Anteile Alkalimetallsalz deutlich kleiner als im Falle einer ternären Mischung unter Verwendung einer ionischen Flüssigkeit.

Tabelle 5:

| Ternäre Mischungen (MMIM MS/EG/LiBTA) | | | | | | | | |
|---|---|---|---|---|---|---|---|---|
| **Vers.- Nr.** | **Antistatikum** | **Teile Antistatikum** | **ent spricht Teile Salz** | **[Ω] ganzer Block ø aus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | Blindwert | - | - | 2,82E+11 | 5,23E+11 | 3,65E+11 | | |
| 17 | 4,2 g MMIM MS; 10 g EG; 5,8 g UBTA (29%) | 1 | 0,290 | 3,55E+09 | 6,67E+09 | 4,47E+09 | | |
| | | | | 79 | 79 | 82 | **80** | **28** |
| 18 | 2,9 g MMIM MS; 14g EG; 4,1 g LiBTA (19,5 %) | 1 | 0,195 | 6,72E+09 | 1,01E+10 | 7,17E+09 | | |
| | | | | 42 | 52 | 51 | **48** | **25** |
| | Blindwert | - | - | 4,58E+11 | 8.17E+11 | 6,17E+11 | | |
| 19 | 4,2 g MMIM MS; 10 g EG; 5,8 g LiBTA (29 %) | 2 | 0,58 | 1,21E+09 | 1,72E+09 | 1,31E+09 | | |
| | | | | 378 | 476 | 471 | **441** | **76** |
| 20 | 4,2 g MMIM MS; 10 g EG; 5,8 g LiBTA (29 %) | 4 | 1,16 | 8,28E+08 | 1,31E+09 | 9,73E+08 | | |
| | | | | 553 | 623 | 634 | **603** | **52** |
| 21 | 4,2 g MMIM MS; 10 g EG; 5,8 g LiBTA (29 %) | 6 | 1,74 | 9,58E+08 | 1,17E+09 | 1,02E+09 | | |
| | | | | 478 | 700 | 607 | **595** | **34** |

Mit den ternären Mischungen (MMIM MS/EG/LiBTA) zeigt sich, dass die Leitfähigkeit (gemessen an den Verbesserungsfaktoren pro 0,1 Anteil Salz) sinkt je mehr Anteile der Mischung in der PU-Formulierung verwendet werden.

Tabelle 6:

| Ternäre Mischungen (MMIM MS/EG/verschiedene Leitsalze) | | | | | | | | |
|---|---|---|---|---|---|---|---|---|
| **Vers.- Nr.** | **Antistatikum** | **Teile Antistatikum** | **entspricht Teile Salz** | **[Ω] ganzer Block ø aus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | Blindwert | - | - | 2,95E+11 | 5,23E+11 | 3,65E+11 | | |
| 22 | 7 g MMIM MS; 10 g EG; 3 g $NaN(CN)_2$ (15 %) | 1 | 0,15 | 8,22E+09 | 1,33E+10 | 1,05E+10 | | |
| | | | | 34 | 39 | 35 | **36** | **24** |
| 23 | 4,9 g MMIM MS; 14 g EG; 2,1 g $NaN(CN)_2$ (10 %) | 1 | 0,1 | 1,40E+10 | 2,55E+10 | 1,47E+10 | | |
| | | | | 20 | 21 | 25 | **22** | **22** |
| 24 | 5,3 g MMIM MS; 10 g EG; 4,7 g $KPF_6$ (23,5 %) | 1 | 0.235 | 8,70E+09 | 1,12E+10 | 8,83E+09 | | |
| | | | | 32 | 47 | 41 | **40** | **17** |
| 25 | 3,7 g MMIM MS; 14 g EG; 3,3 g $KPF_6$ (15,7%) | 1 | 0,157 | 1,47E+10 | 2,15E+10 | 1,72E+10 | | |
| | | | | 19 | 24 | 21 | **22** | **14** |
| 26 | 6,5 g MMIM MS; 10 g EG; 3,5 g $NaBF_4$ (17,5 %) | 1 | 0,175 | 9,57E+09 | 1,57E+10 | 1,15E+10 | | |
| | | | | 29 | 33 | 32 | **32** | **18** |
| 27 | 4,6 g MMIM MS; 14 g EG; 2,4 g $NaBF_4$ (11,4 %) | 1 | 0,114 | 1,11E+10 | 2,08E+10 | 1,35E+10 | | |

(fortgesetzt)

| Ternäre Mischungen (MMIM MS/EG/verschiedene Leitsalze) | | | | | | | | |
|---|---|---|---|---|---|---|---|---|
| **Vers.- Nr.** | **Antistatikum** | **Teile Antistatikum** | **entspricht Teile Salz** | **[Ω] ganzer Block ø aus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | | | | 25 | 25 | 27 | **26** | **23** |
| 28 | 7,2 g MMIM MS; 10 g EG; 2,8 g NaSCN (14 %) | 1 | 0,14 | 8,87E+09 | 1,53E+10 | 7,43E+09 | | |
| | | | | 32 | 34 | 49 | **38** | **27** |
| 29 | 5 g MMIM MS; 14 g EG; 2 g NaSCN (9.5 %) | 1 | 0,095 | 1,33E+10 | 2,37E+10 | 1,40E+10 | | |
| | | | | 21 | 22 | 26 | **23** | **24** |

In den ternären Mischungen (MMIM MS/EG/Leitsalz) zeigt sich, dass die Mischungen mit der höheren Salzkonzentration (dem niedrigeren Anteil EG) gemessen an den Verbesserungsfaktoren pro 0,1 Anteil Salz die Leitfähigeren sind.

Tabelle 7:

| Ternäre Mischungen (EMIM ES/EG/verschiedene Leitsalze) | | | | | | | | |
|---|---|---|---|---|---|---|---|---|
| **Vers.- Nr.** | **Antistatikum** | **Teile Anti statikum** | **entspricht Teite ø Salz** | **[Ω] ganzer Block aus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | Blindwert | - | - | 3.42E+11 | 7,17E+11 | 4,77E+11 | | |
| 30 | 4,5g EMIM ES; 10g EG; 5,5g LiBTA (27,5%) | 1 | 0,275 | 6,58E+09 | 1,04E+10 | 6,17E+09 | | |
| | | | | 52 | 69 | 77 | **66** | **24** |
| 31 | 3,2g EMIM ES; 14g EG; 3,8g LiBTA (18,1%) | 1 | 0,181 | 8,35E+09 | 1,30E+10 | 7,23E+09 | | |
| | | | | 41 | 55 | 66 | **54** | **30** |
| | 7,3 g EMIM ES; 10 g EG; 2,7g NaN $(CN)_2$ 32 (13,5%) | 1 | 0,135 | 2,42E+10 | 1,30E+10 | 1,11E+10 | | |
| | | | | 14 | 55 | 43 | **37** | **27** |
| 33 | 5,1g EMIM ES; 14g EG; 1,9g $NaN(CN)_2$ (9%) | 1 | 0,09 | 1,66E+10 | 1,87E+10 | 1,30E+10 | | |
| | | | | 21 | 38 | 37 | **32** | **36** |
| 34 | 5,6g EMIM ES; 10g EG; 4,4g $KPF_6$ (22 %) | 1 | 0,22 | 9,17E+09 | 1,20E+10 | 8,17E+09 | | |
| | | | | 37 | 60 | 58 | **52** | **24** |
| 35 | 3,9g EMIM ES; 14g EG; 3,1g $KPF_6$ (14,8 %) | 1 | 0,148 | 1,10E+10 | 1,25E+10 | 1,10E+10 | | |
| | | | | 31 | 57 | 43 | **44** | **30** |

(fortgesetzt)

| Ternäre Mischungen (EMIM ES/EG/verschiedene Leitsalze) | | | | | | | | |
|---|---|---|---|---|---|---|---|---|
| **Vers.- Nr.** | **Antistatikum** | **Teile Anti statikum** | **entspricht Teite ø Salz** | **[Ω] ganzer Block aus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| 36 | 6,8g EMIM ES; 10g EG; 3,2g $NaBF_4$ (16 %) | 1 | 0,16 | 1,20E+10 | 1,83E+10 | 1,20E+10 | | |
| | | | | 28 | 39 | 40 | **36** | **23** |
| 37 | 4,8g EMIM ES; 14g EG; 2,2g $NaBF_4$ (10,5 %) | 1 | 0,105 | 1,75E+10 | 2,47E+10 | 1,60E+10 | | |
| | | | | 20 | 29 | 30 | **26** | **25** |
| 38 | 7,5g EMIM ES; 10g EG; 2,5g NaSCN (12,5%) | 1 | 0,125 | 1.24E+10 | 1,67E+10 | 1,17E+10 | | |
| | | | | 27 | 43 | 41 | **37** | **30** |
| 39 | 5,2g EMIM ES; 14g EG; 1,8g NaSCN (8,6%) | 1 | 0,086 | 1,69E+10 | 2,35E+10 | 1,57E+10 | | |
| | | | | 20 | 30 | 30 | **27** | **31** |

Tabelle 8:

| Ternäre Mischungen (verschiedene ILs/EG/$KPF_6$) | | | | | | | | |
|---|---|---|---|---|---|---|---|---|
| **Vers.- Nr.** | **Antistatikum** | **Teile Antistatikum** | **ent spricht Teile Salz** | **ganzer Block ø aus 6 Messungen** | **2,7 cm Schnitt ø aus 3 Messungen** | **1,2 cm Schnitt ø aus 3 Messungen** | **VbF** | **$VbF_{rel}$** |
| | Blindwert | - | - | 3,92E+11 | 6,30E+11 | 4,77E+11 | | |
| 40 | 40g TEGO IL T16ES 10g EG, 9g $KPF_6$ (15 %) | 1 | 0,15 | 2,08E+10 | 3,00E+10 | 2,15E+10 | | |
| | | | | 19 | 21 | 22 | **21** | **14** |
| 41 | 40g TEGO IL T16ES 10g EG, 9g $KPF_6$ (15 %) | 2 | 0,30 | 1,01E+10 | 1,50E+10 | 1,10E+10 | | |
| | | | | 39 | 42 | 43 | **41** | **14** |
| 42 | 40g TEGO IL T16ES 10g EG, 9g $KPF_6$ (15 %) | 3 | 0,45 | 7,72E+09 | 8,93E+09 | 6,83E+09 | | |
| | | | | 51 | 71 | 70 | **64** | **14** |
| 43 | 40g TEGO IL T16ES 10g EG, 9g $KPF_6$ (15%) | 4 | 0,60 | 6,75E+09 | 8,33E+09 | 5,90E+09 | | |
| | | | | 58 | 76 | 81 | **71** | **12** |
| 44 | 40g TEGO IL T16ES 10g EG, 9g $KPF_6$ (15 %) | 1 | 0,15 | 2,08E+10 | 3,00+10 | 2,15E+10 | | **14** |
| 45 | 3,7g MMIM MS; 14g EG; 3,3g $KPF_6$ (15,7 %) | 1 | 0,157 | 1,47E+10 | 2,15E+10 | 1,72E+10 | | **14** |

(fortgesetzt)

| Ternäre Mischungen (verschiedene ILs/EG/$KPF_6$) | | | | | | | | |
|---|---|---|---|---|---|---|---|---|
| **Vers.- Nr.** | **Antistatikum** | **Teile Antistatikum** | **ent spricht Teile Salz** | **ganzer Block ø aus 6 Messungen** | **2,7 cm Schnitt ø aus 3 Messungen** | **1,2 cm Schnitt ø aus 3 Messungen** | **VbF** | **$VbF_{rel}$** |
| 46 | 3,9g EMIM ES; 14g EG; 3,1g $KPF_6$ (14,8 %) | 1 | 0,148 | 1,10E+10 | 1,25E+10 | 1,10E+10 | | **30** |

Bei nahezu gleichem Anteil an $KPF_6$ in der PU-Formulierung hat die Wahl der ionischen Flüssigkeit einen großen Einfluss auf die Leitfähigkeit des PU-Schaumes bzw. den zu erzielenden Verbesserungsfaktor. EMIM ES ist deutlich effektiver als MMIM MS.

Tabelle 9:

| Binäre Mischung (BMIM BR/LiBTA) | | | | | | | | |
|---|---|---|---|---|---|---|---|---|
| **Vers.- Nr.** | **Antistatikum** | **Teile Antistatikum** | **entspricht Teile ø aus Salz** | **[Ω] ganzer Block 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | Blindwert | - | - | 3,55E+11 | 7,67E+11 | 5,00E+11 | | |
| 47 | 18 g BMIM BR 2gLiBTA(10%) | 1 | 0,1 | 7,20E+09 | 1,12E+10 | 6,53E+09 | | |
| | | | | 49 | 69 | 77 | **65** | **65** |
| 48 | 18 g BMIM BR 2 g LiBTA (10%) | 2 | 0,2 | 4,45E+09 | 5,27E+09 | 4,42E+09 | | |
| | | | | 80 | 146 | 113 | **113** | **57** |
| 49 | 18 g BMIM BR 2 g LiBTA (10%) | 3 | 0,3 | 2,77E+09 | 5,83E+09 | 3,57E+09 | | |
| | | | | 128 | 131 | 140 | **133** | **44** |
| 50 | 18 g BMIM BR 2 g LiBTA (10%) | 4 | 0,4 | 2,10E+09 | 3,67E+09 | 2,20E+09 | | |
| | | | | 169 | 209 | 227 | **202** | **51** |

Der relative Verbesserungsfaktor sinkt, je mehr Anteile der Mischung in der PU-Formulierung verwendet werden (Sättigungseffekt). Allerdings hat BMIM BR einen positiven Effekt auf die Leitfähigkeit des Schaumes vgl. mit (MMIM/EMIM MS/ES//EG)-Mischungen.

Tabelle 10:

| Ternäre Mischung = äquimolar $KPF_6$ /MMIM ES + gleicher Massenanteil EG | | | | | | | | |
|---|---|---|---|---|---|---|---|---|
| **ent- Vers.- Nr.** | **Antistatikum** | **Teile Anti statikum** | **entspricht Teile Salz** | **[Ω] ganzer Block øaus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | Blindwert | - | - | 2,95E+11 | 5,23E+11 | 3,65E+11 | | |
| 51 | 5,3g MMIM MS; 10g EG; 4,7g $KPF_6$ (23,5 %) | 1 | 0,235 | 8,70E+09 | 1,12E+10 | 8,83E+09 | | |
| | | | | 32 | 47 | 41 | **40** | **17** |
| | Blindwert | - | - | 4,58E+11 | 8,17E+11 | 6,17E+11 | | |
| 52 | 5,3g MMIM MS; 10g EG; 4,7g $KPF_6$ (23,5 %) | 2 | 0,47 | 4,98E+09 | 5,13E+09 | 4,37E+09 | | |
| | | | | 9,21 E+01 | 1,59E+02 | 1,41 E+02 | **131** | **28** |
| 53 | 5,3g MMIM MS; 10g EG; 4,7g $KPF_6$ (23,5 %) | 4 | 0,94 | 3,03E+09 | 4,37E+09 | 2,70E+09 | | |
| | | | | 1,51 E+02 | 1,87E+02 | 2,28E+02 | **189** | **20** |
| 54 | 5,3 g MMIM MS; 10 g EG; 4,7g $KPF_6$ (23,5 %) | 6 | 1,41 | 1,95E+09 | 2,55E+09 | 1,57E+09 | | |
| | | | | 2,35E+02 | 3,20E+02 | 3,92E+02 | **316** | **22** |
| 55 | 5,3g MMIM MS; 10g EG; 4,7g $KPF_6$ (23,5 %) | 7,6 | 1,786 | 1,39E+09 | 1,82E+09 | 1,10E+09 | | |
| | | | | 3,29E+02 | 4,50E+02 | 5,59E+02 | **446** | **25** |

Je mehr Teile Antistatikum eingesetzt werden, umso höher ist die Leitfähigkeit (linearer Zusammenhang).

Tabelle 11:

| Reine IL BMIM TC: | | | | | | | | |
|---|---|---|---|---|---|---|---|---|
| **Vers.-Nr.** | **Antistatikum** | **Anti statikum** | **ent spricht Teile Salz** | **[Ω] ganzer Block ø aus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | Blindwert | - | - | 4,58E+11 | 8,17E+11 | 6,17E+11 | | |
| 56 | BMIM SCN | 2 | | 2,71E+09 | 2,05E+09 | 2,47E+09 | | |
| | | | | 1,69E+02 | 3,98E+02 | 2,50E+02 | 273 | - |
| 57 | BMIM SCN | 4 | | 1,17E+09 | 1,07E+09 | 4,68E+09 | | |
| | | | | 3,93E+02 | 7,66E+02 | 1,32E+02 | 430 | - |

Tabelle 12:

| Maximaler Gehalt an Leitsalz in IL (EMIM ES) | | | | | | | | |
|---|---|---|---|---|---|---|---|---|
| **Vers.- Nr.** | **Antistatikum** | **Anti statikum** | **ent spricht Teile Salz** | **[Ω] ganzer Block ø aus 6 Messungen** | **[Ω] 2,7 cm Schnitt ø aus 3 Messungen** | **[Ω] 1,2 cm Schnitt ø aus 3 Messungen** | **VbF** | **$VbF_{rel}$** |
| | Blindwert | - | - | 4,58E+11 | 8,17E+11 | 6,17E+11 | | |
| 58 | 20,0g EMIM ES<br>4g $NaN(CN)_2$<br>(16,7%) | 4 | 0,67 | 1,48E+09 | 1,53E+09 | 1,16E+09 | | |
| | | | | | | | **420** | **63** |
| 59 | 20,0g EMIM ES<br>4g $NaN(CN)_2$<br>(16,7%) | 8 | 1,34 | 6.75E+08 | 6,13E+08 | 6,17E+08 | | |
| | | | | | | | **789** | **59** |
| 60 | 20.0g EMIM ES<br>2g NaSCN<br>(9,1%) | 4 | 0,364 | 2,05E+09 | 2,20E+09 | 1,60E+09 | | |
| | | | | | | | **304** | **83** |
| 61 | 20.0g EMIM ES<br>2g NaSCN<br>(9,1%) | 8 | 0,728 | 9,87E+08 | 1,15E+09 | 4,30E+08 | | |
| | | | | | | | **1132** | **155** |
| 62 | 20g EMIM ES<br>1,4g KSCN<br>(6,5%) | 2 | 0,131 | 7,83E+09 | 1,08E+10 | 5,37E+09 | | |
| | | | | 5,85E+01 | 7,59E+01 | 1,15E+02 | **83** | **63** |
| 63 | 20g EMIM ES<br>1,4g KSCN<br>(6,5%) | 6 | 0,393 | 1,92E+09 | 2,50E+09 | 2,73E+09 | | |
| | | | | 2,39E+02 | 3,27E+02 | 2,26E+02 | **264** | **67** |

Die Absolutwerte der Leitfähigkeit des PU-Schaumes sind hoch, aber ohne EG sind bei diesen Alkalimetallsalzkonzentrationen keine klaren Lösungen des Salzes in der reinen ionischen Flüssigkeit zu erhalten; die relativen Verbesserungsfaktoren sind kleiner als in den entsprechenden ternären Mischungen.

Tabelle 13:

| Maximaler Gehalt verschiedener Leitsalze in ternären Mischungen (EG/EMIM ES/Leitsalz) | | | | | | | | |
|---|---|---|---|---|---|---|---|---|
| **Vers.- Nr.** | **Antistatikum** | **Anti statikum** | **ent spricht Teile Salz** | **[Ω] Block ganzer Block ø aus 6 Messungen** | **2,7 [Ω] 2,7 cm Schnitt ø aus 3 Messungen** | **[Ω] 1,2 cm Schnitt ø aus 3 Messungen** | **VbF** | **$VbF_{rel}$,** |
| | Blindwert | - | - | 4,58E+11 | 8.17E+11 | 6,17E+11 | | |
| 64 | 9,2g EMIM ES<br>20,55g EG<br>20,25g KSCN<br>(40,5%) | 4 | 1,62 | 1,45E+09 | 1,73E+09 | 1.05E+09 | **464** | **29** |
| 65 | 9,2g EMIM ES<br>20,55g EG<br>20,25g KSCN<br>(40,5%) | 8 | 3,24 | 8,55E+08 | 1,16E+09 | 7,93E+08 | **614** | **19** |
| 66 | 8,17g EMIM ES<br>16,8g NaSCN<br>(33,6 Gew.-%)<br>25,0g EG | 4 | 1,344 | 3,87E+09 | 7.17E+09 | 2,57E+09 | **189** | **14** |
| 67 | 8,17g EMIM ES<br>16,8g NaSCN<br>(33,6 Gew.-%)<br>25,0g EG | 8 | 2,688 | 9,00E+08 | 1,08E+09 | 7,93E+08 | **614** | **23** |

Möglichst hohe Konzentrationen an Leitsalz in den ternären Mischungen gehen nicht zwangsläufig einher mit deutlich höheren Leitfähigkeiten oder größeren relativen Verbesserungsfaktoren. Die relativen Verbesserungsfaktoren sind sogar deutlich kleiner als bei den Mischungen, bei denen Leitsalz und ionische Flüssigkeit equimolar gemischt sind.

Zusammenfassende Beurteilung:

1. Je mehr Anteile der ternären Mischungen 3° ND und 3° NT in der PU-Formulierung eingesetzt werden, desto größer ist der Verbesserungsfaktor! Synergistischer Effekt. Exponentieller Anstieg der Leitfähigkeit (Tabellen 1 und 2).

2. Im Falle der binären Mischung 2° NT ist der Verbesserungseffekt pro 0,1 Anteile Salz in der PU-Formulierung geringer als in dem Falle einer ternären Mischung {IL/EG/Alkalimetallsalz} (Tabelle 3).

3. Für EP-S 89 wird der relative Verbesserungsfaktor mit zunehmenden Anteil Antistatikum an der Gesamtformulierung kleiner. D. h. je mehr eingesetzt wird, umso geringer fällt der Leitfähigkeitszuwachs aus. Dies ist gleichbedeutend mit einem Sättigungseffekt. Die Erhöhung der Leitfähigkeit ist nicht direkt proportional zur Einsatzmenge. Zusätzlich ist der relative Verbesserungsfaktor pro 0,1 Anteile Alkalimetallsalz deutlich kleiner als im Falle einer ternären Mischung unter Verwendung einer ionischen Flüssigkeit (Tabelle 4) .

4. Mit der ternären Mischung (MMIM MS/EG/LiBTA) zeigt sich, dass die Leitfähigkeit gemessen an den relativen Verbesserungsfaktoren sinkt, je mehr Anteile des Antistatikums in der PU-Formulierung verwendet werden. Dies lässt den Schluss zu, dass der zuvor beschriebene synergistische Effekt bei Verwendung von NaSCN und $NaN(CN)_2$ deutlich stärker zum Tragen kommt als bei Verwendung von LiBTA (Tabelle 5).

5. Bei Verwendung ternärer Mischungen (BMIM MS/EG/Leitsalz), die verschiedene Leitsalze aber die gleiche IL enthalten (Tabelle 6), zeigt sich, dass die Mischungen mit dem höheren Alkalimetallsalzgehalt (bzw. dem niedrigeren Anteil EG) gemessen an den relativen Verbesserungsfaktoren die leitfähigeren sind. Überraschenderweise beobachtet man bei Verwendung von EMIM ES als IL genau den umgekehrten Effekt. Bei Verwendung von EMIM ES sind es die ternären Mischungen, die einen geringeren Alkalimetallsalzgehalt haben, gemessen an den relativen Verbesserungsfaktoren die effektiveren. Darüber hinaus belegt diese Versuchsreihe (Tabellen 6 und 7), dass die Salze NaSCN und $NaN(CN)_2$ in solchen ternären Mischungen einen größeren relativen Verbesserungsfaktor bedingen als die Alkalimetallsalze $NaBF_4$ und $KPF_6$.

6. Die in Tabelle 8 zusammengefassten Ergebnisse belegen, dass EMIM ES verglichen mit MMIM MS und TEGO IL T16ES die effektivere IL in ternären Antistatika ist.

7. Tabelle 11: Bei Verwendung binärer Mischungen (IL + Leitsalz, ohne EG) sind die Absolutwerte der Leitfähigkeit des PU-Schaumes hoch, aber ohne EG sind bei diesen Alkalimetallsalzkonzentrationen keine klaren Lösungen des Alkalimetallsalzes in der reinen ionischen Flüssigkeit zu erhalten. Darüber hinaus sind die relativen Verbesserungsfaktoren kleiner als in den entsprechenden ternären Mischungen.

## Patentansprüche

**1.** Verwendung von Lösungen aus Metallsalzen in ionischen Flüssigkeiten als Antistatika für Kunststoffe.

**2.** Verwendung von Lösungen aus Metallsalzen nach Anspruch, 1 in synergistischen Mischungen aus ionischen Flüssigkeiten und Di- und/oder Polyolen als Antistatika für Kunststoffe.

**3.** Verwendung nach einem der Ansprüche 1 oder 2 als Antistatika für Polyurethane.

**4.** Verwendung nach einem der Ansprüche 1 bis 3, **dadurch gekennzeichnet, dass** die ionischen Flüssigkeiten aus mindestens einem Kation der allgemeinen Formeln (1) bis (4) bestehen:

$$R^1R^2R^3R^4N^+ \qquad (1)$$

$R^1R^2N^T=CR^3R^4$ (2)

$R^1R^2R^3R^4P^+$ (3)

$R^1R^2P^+=CR^3R^4$ (4)

in denen

$R^1$,$R^2$,$R^3$,$R^4$ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -($CH_3$)N-C(O)-, -(O)C-N($CH_3$)-, -S($O_2$)-O-, -O-S($O_2$)-, -S($O_2$)-NH-, -NH-S($O_2$)-, -S($O_2$)-N($CH_3$)-, -N($CH_3$)-S($O_2$)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß $-(R^5-O)_n-R^6$ bedeuten,
wobei
$R^5$ ein 2 bis 4 Kohlenstoffatome enthaltender linearer oder verzweigter Kohlenwasserstoffrest,
n 1 bis 100, ist und
$R^6$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest $-C(O)-R^7$ mit

$R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

**5.** Verwendung gemäß Anspruch 4, **dadurch gekennzeichnet, dass** Kationen verwendet werden, die sich von gesättigten oder ungesättigten cyclischen Verbindungen sowie von aromatischen Verbindungen mit jeweils mindestens einem dreibindigen Stickstoffatom in einem 4- bis 10-gliedrigen heterocyclischen Ring der allgemeinen Formeln (5), (6) und (7) ableiten, wobei die heterocyclischen Ringe gegebenenfalls weitere Hetereoatome enthalten können

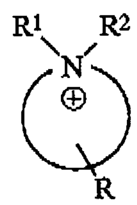
(5)

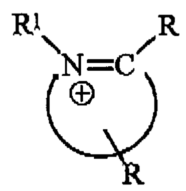
(6)

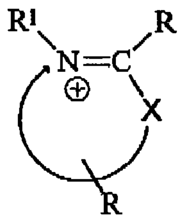

(7)

und worin die Substituenten die folgende Bedeutung haben

R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cycloaliphatischer gegebenenfalls Doppelbindungen enthaltender Kohlenwasserstoffrest mit 5 bis 40 Kohlenstoffatomen, ein aromatischer Kohlenwasserstoffrest mit 6 bis 40 Kohlenstoffatomen oder ein Alkylarylrest mit 7 bis 40 Kohlenstoffatomen.

$R^1$ und $R^2$ besitzen dabei die vorgenannte Bedeutung,

$R^{1a}$ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR' mit R' gleich einem gegebenenfalls Doppelbindungen enthaltenden $C_1$-$C_{30}$-Alkylrest, insbesondere -$CH_3$) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -($CH_3$)N-C(O)-, -(O)C-N($CH_3$)-, -S($O_2$)-O-, -O-S($O_2$)-, -S($O_2$)-NH-, -NH-S($O_2$)-, -S($O_2$)-N($CH_3$)-, -N($CH_3$)-S($O_2$)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäß -($R^5$-O)$_n$-$R^6$ bedeuten,

X ist ein Sauerstoffatom, ein Schwefelatom oder ein substituiertes Stickstoffatom (X = O, S, $NR^{1a}$).

6. Verwendung gemäß einem der Ansprüche 4 oder 5 als Anstistatika für Polyurethane.

7. Verwendung gemäß mindestens einem der Ansprüche 1 bis 5, **dadurch gekennzeichnet, dass** die ionischen Flüssigkeiten aus mindestens einem Kation der allgemeinen Formel (8) mitverwendet werden

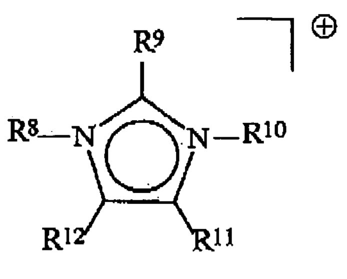

(8)

in denen

$R^8$,$R^9$,$R^{10}$,$R^{11}$,$R^{12}$ gleich oder unterschiedlich sind und Wasserstoff, einen linearen oder verzweigten gegebenenfalls Doppelbindungen enthaltenden aliphatischen Kohlenwasserstoffrest mit 1 bis 30, vorzugsweise 1 bis 8, insbesondere 1 bis 4 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere

Heteroatome (Sauerstoff, NH, NR' mit R' gleich einem gegebenenfalls Doppelbindungen enthaltenden $C_1$-$C_{30}$-Alkylrest), unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O)-, -(O)C-NH,-($CH_3$)N-C(O)-, -(O) C-N($CH_3$)-, -S($O_2$)-O-, -O-S($O_2$)-, -S($O_2$)-NH-, -NH-S($O_2$)-, -S($O_2$)-N($CH_3$)-, -N($CH_3$)-S($O_2$)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', $NH_2$, N(H)R', $N(R')_2$ (mit R' gleich einem gegebenenfalls Doppelbindungen enthaltenden $C_1$-$C_{30}$-Alkylrest) funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus $-(R^5\text{-}O)_n\text{-}R^6$ bedeuten, wobei

$R^5$ ein 2 bis 4 Kohlenstoffatome enthaltender Kohlenwasserstoffrest,

n 1 bis 100 ist und

$R^6$ Wasserstoff, einen linearen oder verzweigten gegebenenfalls Doppelbindungen enthaltenden aliphatischen Kohlenwasserstoffrest mit 1 bis 30 Kohlenstoffatomen einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest $-C(O)-R^7$ mit

> $R^7$ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

**8.** Verwendung gemäß mindestens einem der Ansprüche 4 bis 7, **dadurch gekennzeichnet, dass** die ionischen Flüssigkeiten ein Anion, ausgewählt aus der Gruppe der Halogenide, Bis(perfluoralkylsulfonyl)amid bzw. -imid wie z.B. Bis(trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat enthalten, vorzugsweise Anionen der Verbindungen Thiocyanat, Isothiocyanat, Dicyanamid, Tetraphenylborat, Tetrakis(pentafluorphenyl)borat, Tetrafluoroborat, Hexafluorophosphat, Phosphat und Polyetherphosphate, enthalten.

**9.** Verwendung gemäß mindestens einem der Ansprüche 1 bis 8, **dadurch gekennzeichnet, dass** die ionischen Flüssigkeiten ein Kation ausgewählt aus Verbindungen der allgemeinen Formeln (1) und/oder (7) und ein Dicyanamid-, Thiocyanat-, Isothiocyanat-, Hexafluorophosphat-Anion enthalten.

**10.** Verwendung gemäß mindestens einem der Ansprüche 1 bis 9, **dadurch gekennzeichnet, dass** Mischungen aus zwei oder mehreren ionischen Flüssigkeiten bestehend aus Kationen der allgemeinen Formeln (1) bis (8) jeweils kombiniert mit mindestens einem Anion eingesetzt werden.

**11.** Verwendung gemäß mindestens einem der Ansprüche 1 bis 10, **dadurch gekennzeichnet, dass** diese als Leitsalze mindestens ein Salz ausgesucht aus der Gruppe der insbesondere Alkalimetallsalze mit den Anionen Bis(perfluoralkylsulfonyl)amid bzw. -imid wie Bis(trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrachloroaluminat, Saccharinat, Thiocyanat, Isothiocyanat, Dicyanamid, Tetraphenylborat, Tetrakis(pentafluorphenyl)borat, Tetrafluoroborat, Hexafluorophosphat, Phosphat und Polyetherphosphate, enthalten.

## Claims

**1.** Use of solutions of metal salts in ionic liquids as antistatics for plastics.

**2.** Use of solutions of metal salts according to Claim 1 in synergistic mixtures of ionic liquids and diols and/or polyols as antistatics for plastics.

**3.** Use according to either Claim 1 or 2 as antistatics for polyurethanes.

**4.** Use according to one of Claims 1 to 3, **characterized in that** the ionic liquids comprise at least one cation of the general formulae (1) to (4):

$R^1R^2R^3R^4N^+$ (1)

$R^1R^2N^+=CR^3R^4$ (2)

$R^1R^2R^3R^4P^+$ (3)

$R^1R^2P^+=CR^3R^4$ (4)

where

$R^1$, $R^2$, $R^3$, $R^4$ are identical or different and are each hydrogen, a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms, an alkylaryl radical having from 7 to 40 carbon atoms, a linear or branched aliphatic hydrocarbon radical which has from 2 to 30 carbon atoms and may contain double bonds and is interrupted by one or more heteroatoms (oxygen, NH, NR' where R' is a $C_1$-$C_{30}$-alkyl radical which may contain double bonds), a linear or branched aliphatic hydrocarbon radical which has from 2 to 30 carbon atoms and may contain double bonds and is interrupted by one or more functions selected from the group consisting of -O-C(O)-, -(O)C-O-, -NH-C(O)-, -(O)C-NH, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, a linear or branched aliphatic or cycloaliphatic hydrocarbon radical which has from 1 to 30 carbon atoms and may contain double bonds and is functionalized by terminal OH, OR', $NH_2$, N(H)R', $N(R')_2$ groups (where R' is a $C_1$-$C_{30}$-alkyl radical which may contain double bonds) or a polyether $-(R^5-O)_n-R^6$ having a blockwise or random structure,
where

$R^5$ is a linear or branched hydrocarbon radical containing from 2 to 4 carbon atoms,
n is from 1 to 100 and
$R^6$ is hydrogen, a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms, an alkylaryl radical having from 7 to 40 carbon atoms or a radical $-C(O)-R^7$, where

$R^7$ is a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms or an alkylaryl radical having from 7 to 40 carbon atoms.

**5.** Use according to Claim 4, **characterized in that** cations are used which are derived from saturated or unsaturated cyclic compounds or from aromatic compounds having, in each case, at least one trivalent nitrogen atom in a 4- to 10-membered, heterocyclic ring of the general formulae (5), (6) and (7), where the heterocyclic rings may, if desired, also be able to contain further heteroatoms

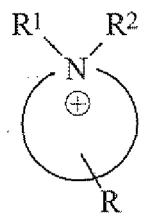
(5)
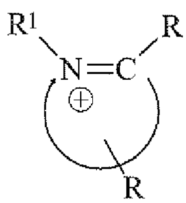
(6)
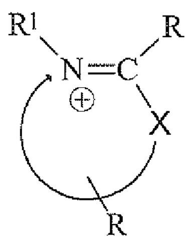
(7)

and in which the substituents have the following meanings:

R is a hydrogen, a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms or an alkylaryl radical having from 7 to 40 carbon atoms,
$R^1$ and $R^2$ have the abovementioned meanings,
$R^{1a}$ is hydrogen, a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical which has from 6 to 40 carbon atoms, an alkylaryl radical having from 7 to 40 carbon atoms, a linear or branched aliphatic hydrocarbon radical which has from 2 to 30 carbon atoms and may contain double bonds and is interrupted by one or more heteroatoms (oxygen, NH, NR' where R' is a $C_1$-$C_{30}$-alkyl radical which may contain double bonds, in particular $-CH_3$), a linear or branched aliphatic hydrocarbon radical which has from 2 to 30 carbon atoms and may contain double bonds and is interrupted by one or more functions selected from the group consisting of -O-C(O)-, -(O)C-O-, -NH-C(O)-, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, a linear or branched aliphatic or cycloaliphatic hydrocarbon radical which has from 1 to 30 carbon atoms and may contain double bonds and is functionalized by terminal OH, OR', $NH_2$, N(H)R', $N(R')_2$ groups (where R' is a $C_1$-$C_{30}$-alkyl radical which may contain double bonds) or a polyether $-(R^5-O)_n-R^6$ having a blockwise or random structure,
X is an oxygen atom, a sulfur atom or a substituted nitrogen atom (X = O, S, $NR^{1a}$).

**6.** Use according to either Claim 4 or 5 as antistatics for polyurethanes.

**7.** Use according to at least one of Claims 1 to 5, **characterized in that** the ionic liquids comprise at least one cation of the general formula (8)

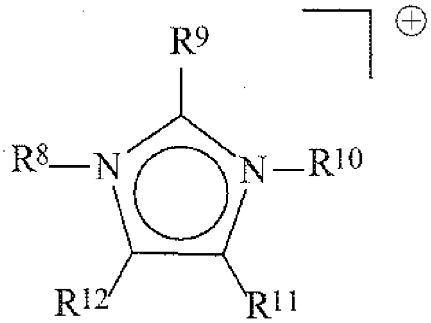

(8)

where

$R^8$, $R^9$, $R^{10}$, $R^{11}$, $R^{12}$ are identical or different and are each hydrogen, a linear or branched aliphatic hydrocarbon radical which has from 1 to 30, preferably from 1 to 8, in particular from 1 to 4, carbon atoms and may contain double bonds, a cycloaliphatic hydrocarbon radical which has from 5 to 40 carbon atoms and may contain double bonds, an aromatic hydrocarbon radical having from 6 to 40 carbon atoms, an alkylaryl radical having from 7 to 40 carbon atoms, a linear or branched aliphatic hydrocarbon radical which has from 1 to 30 carbon atoms and may contain double bonds and is interrupted by one or more heteroatoms (oxygen, NH, NR' where R' is a $C_1$-$C_{30}$-alkyl radical which may contain double bonds), a linear or branched aliphatic hydrocarbon radical which has from 1 to 30 carbon atoms and may contain double bonds and is interrupted by one or more functions selected from the group consisting of -O-C(O)-, -(O)C-O-, -NH-C(O)-, -(O)C-NH, $-(CH_3)N-C(O)-$, $-(O)C-N(CH_3)-$, $-S(O_2)-O-$, $-O-S(O_2)-$,- $S(O_2)-NH-$, $-NH-S(O_2)-$, $-S(O_2)-N(CH_3)-$, $-N(CH_3)-S(O_2)-$, a linear or branched aliphatic or cycloaliphatic hydrocarbon radical which has from 1 to 30 carbon atoms and may contain double bonds and is functionalized by terminal OH, OR', $NH_2$, N(H)R', $N(R')_2$ groups (where R' is a $C_1$-$C_{30}$-alkyl radical which may contain double bonds) or a polyether $-(R^5-O)_n-R^6$ which has a blockwise or random structure, where

$R^5$ is a hydrocarbon radical containing from2 to 4 carbon atoms,
n is from 1 to 100 and
$R^6$ is hydrogen, a linear or branched aliphatic hydrocarbon radical which has from 1 to 30 carbon atoms

and may contain double bonds, a cycloaliphatic hydrocarbon radical which has from 5 to 40 carbon atoms and may contain double bonds, an aromatic hydrocarbon radical having from 6 to 40 carbon atoms, an alkylaryl radical having from 7 to 40 carbon atoms or a radical -C(O)-$R^7$, where

$R^7$ is a linear or branched aliphatic hydrocarbon radical which has from 1 to 30 carbon atoms and may contain double bonds, a cycloaliphatic hydrocarbon radical which has from 5 to 40 carbon atoms and may contain double bonds, an aromatic hydrocarbon radical having from 6 to 40 carbon atoms or an alkylaryl radical having from 7 to 40 carbon atoms.

**8.** Use according to at least one of Claims 4 to 7, **characterized in that** the ionic liquids contain an anion selected from the group consisting of halides, bis(perfluoroalkylsulfonyl)amides or- imides such as bis(trifluoromethylsulfonyl) imide, alkyltosylates and aryltosylates, perfluoroalkyltosylates, nitrate, sulfate, hydrogensulfate, alkylsulfates and arylsulfates, polyether sulfates and sulfonates, perfluoroalkylsulfates, sulfonate, alkylsulfonates and arylsulfonates, perfluorinated alkylsulfonates and arylsulfonates, alkylcarboxylates and arylcarboxylates, perfluoroalkylcarboxylates, perchlorate, tetrachloroaluminate, saccharinate, preferably anions of the compounds thiocyanate, isothiocyanate, dicyanamide, tetraphenylborate, tetrakis(pentafluorophenyl)borate, tetrafluoroborate, hexafluorophosphate, phosphate and polyether phosphates.

**9.** Use according to at least one of Claims 1 to 8, **characterized in that** the ionic liquids contain a cation selected from among compounds of the general formulae (1) and/or (7) and a dicyanamide, thiocyanate, isothiocyanate, hexafluorophosphate anion.

**10.** Use according to at least one of Claims 1 to 9, **characterized in that** mixtures of two or more ionic liquids comprising cations of the general formulae (1) to (8) in each case combined with at least one anion are used.

**11.** Use according to at least one of Claims 1 to 10, **characterized in that** these contain, as electrolyte salts, at least one salt selected from the group consisting of, in particular, alkali metal salts with the anions bis(perfluoroalkylsulfonyl) amide or -imide such as bis(trifluoromethylsulfonyl)imide, alkyltosylates and aryltosylates, perfluoroalkyltosylates, nitrate, sulfate, hydrogensulfate, alkylsulfates and arylsulfates, polyether sulfates and sulfonates, perfluoroalkylsulfates, sulfonate, alkylsulfonates and arylsulfonates, perfluorinated alkylsulfonates and arylsulfonates, alkylcarboxylates and arylcarboxylates, perfluoroalkylcarboxylates, perchlorate, tetrachloroaluminate, saccharinate, thiocyanate, isothiocyanate, dicyanamide, tetraphenylborate, tetrakis(pentafluorophenyl)borate, tetrafluoroborate, hexafluorophosphate, phosphate and polyether phosphates.

## Revendications

**1.** Utilisation de solutions de sels métalliques dans des liquides ioniques, en tant qu'agents antistatiques pour matières plastiques.

**2.** Utilisation de solutions de sels métalliques selon la revendication 1, dans des mélanges synergiques de liquides ioniques et de di- et/ou polyols, en tant qu'agents antistatiques pour matières plastiques.

**3.** Utilisation selon la revendication 1 ou 2, en tant qu'agents antistatiques pour polyuréthannes.

**4.** Utilisation selon l'une quelconque des revendications 1 à 3, **caractérisée en ce que** les liquides ioniques sont constitués d'au moins un cation de formules générales (1) à (4) :

$$R^1R^2R^3R^4N^+ \quad (1)$$

$$R^1R^2N^+=CR^3R^4 \quad (2)$$

$$R^1R^2R^3R^4P^+ \quad (3)$$

$$R^1R^2P^+=CR^3R^4 \quad (4)$$

dans lesquelles

$R^1$, $R^2$, $R^3$, $R^4$ sont identiques ou différents et représentent un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone, un radical hydrocarboné aliphatique linéaire ou ramifié ayant de 2 à 30 atomes de carbone, comportant éventuellement des doubles liaisons, interrompu par un ou plusieurs hétéroatomes (oxygène, NH, NR', R' représentant un radical alkyle en $C_1$-$C_{30}$ comportant éventuellement des doubles liaisons), un radical hydrocarboné aliphatique linéaire ou ramifié ayant de 2 à 30 atomes de carbone, comportant éventuellement des doubles liaisons, interrompu par une ou plusieurs fonctionnalités, choisie(s) dans le groupe constitué par -O-C(O)-, -(O)C-O-, -NH-C(O)-, -(O)C-NH-, $-(CH_3)N-C(O)-$, $-(O)C-N(CH_3)-$, $-S(O_2)-O-$, $-O-S(O_2)-$, $-S(O_2)-NH-$, $-NH-S(O_2)-$, $-S(O_2)-N(CH_3)-$, $-N(CH_3)-S(O_2)-$, un radical hydrocarboné aliphatique linéaire ou ramifié ou cycloaliphatique ayant de 2 à 30 atomes de carbone, comportant éventuellement des doubles liaisons, fonctionnalisé en bout de chaîne par OH, OR', $NH_2$, N(H)R', $N(R')_2$ (où R' représente un radical alkyle en $C_1$-$C_{30}$ comportant éventuellement des doubles liaisons) ou un polyéther de structure séquencée ou statistique selon $-(R^5-O)_n-R^6$,

$R^5$ représentant un radical hydrocarboné linéaire ou ramifié, contenant de 2 à 4 atomes de carbone,
n valant de 1 à 100, et
$R^6$ représentant un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone ou un radical $-C(O)-R^7$ où
$R^7$ représente un radical hydrocarboné aliphatique linéaire ou ramifié ayant de 1 à 30 atomes de carbone, comportant éventuellement des doubles liaisons, un radical hydrocarboné cycloaliphatique ayant de 5 à 4 0 atomes de carbone, comportant éventuellement des doubles liaisons, un radical hydrocarboné aromatique ayant de 6 à 40 atomes de carbone, un radical alkylaryle ayant de 7 à 40 atomes de carbone.

**5.** Utilisation selon la revendication 4, **caractérisée en ce qu'**on utilise des cations qui dérivent de composés cycliques saturés ou insaturés ainsi que de composés aromatiques comportant chacun au moins un atome d'azote à trois liaisons dans un cycle hétérocyclique à 4-10 chaînons, de formules générales (5), (6) et (7), les cycles hétérocycliques pouvant éventuellement contenir d'autres hétéroatomes

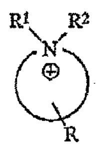
(5)
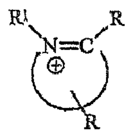
(6)

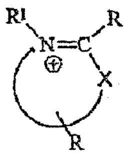
(7)

et dans lesquels les substituants ont les significations suivantes

R est un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone ou un radical alkylaryle ayant de 7 à 40 atomes de carbone,
$R^1$ et $R^2$ ont les significations susmentionnées,
$R^{1a}$ représente un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné

aromatique ayant de 6 à 40 atomes de carbone, un radical alkylaryle ayant de 7 à 40 atomes de carbone, un radical hydrocarboné aliphatique linéaire ou ramifié ayant de 2 à 30 atomes de carbone, comportant éventuellement des doubles liaisons, interrompu par un ou plusieurs hétéroatomes (oxygène, NH, NR', R' représentant un radical alkyle en $C_1$-$C_{30}$ comportant éventuellement des doubles liaisons, en particulier $CH_3$), un radical hydrocarboné aliphatique linéaire ou ramifié ayant de 2 à 30 atomes de carbone, comportant éventuellement des doubles liaisons, interrompu par une ou plusieurs fonctionnalités, choisie(s) dans le groupe constitué par -O-C(O)-, -(O)C-O-, -NH-C(O)-, -($CH_3$)N-C(O)-, -(O)C-N($CH_3$)-, -S($O_2$)-O-, -O-S($O_2$)-, -S($O_2$)-NH-, -NH-S($O_2$)-, -S($0_2$)-N($CH_3$)-, -N($CH_3$)-S($O_2$)-, un radical hydrocarboné aliphatique linéaire ou ramifié ou cycloaliphatique ayant de 1 à 30 atomes de carbone, comportant éventuellement des doubles liaisons, fonctionnalisé en bout de chaîne par OH, OR' , $NH_2$, N(H)R', N(R')$_2$ (où R' représente un radical alkyle en $C_1$-$C_{30}$ comportant éventuellement des doubles liaisons), ou un polyéther de structure séquencée ou statistique selon -($R^5$-O)$_n$-$R^6$,
X est un atome d'oxygène, un atome de soufre ou un atome d'azote substitué (X = O, S, $NR^{1a}$).

**6.** Utilisation selon la revendication 4 ou 5, en tant qu'agents antistatiques pour polyuréthannes.

**7.** Utilisation selon au moins l'une des revendications 1 à 5, **caractérisée en ce qu'**on utilise en même temps les liquides ioniques à base d'au moins un cation de formule générale (8)

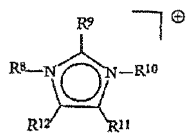

(8)

dans laquelle

$R^8$, $R^9$, R , $R^{11}$, $R^{12}$ sont identiques ou différents et représentent un atome d'hydrogène, un radical hydrocarboné aliphatique linéaire ou ramifié ayant de 1 à 30, de préférence de 1 à 8, en particulier de 1 à 4 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone, un radical hydrocarboné aliphatique linéaire ou ramifié ayant de 1 à 30 atomes de carbone, comportant éventuellement des doubles liaisons, interrompu par un ou plusieurs hétéroatomes (oxygène, NH, NR', R' représentant un radical alkyle en $C_1$-$C_{30}$ comportant éventuellement des doubles liaisons), un radical hydrocarboné aliphatique linéaire ou ramifié ayant de 1 à 30 atomes de carbone, comportant éventuellement des doubles liaisons, interrompu par une ou plusieurs fonctionnalités, choisie(s) dans le groupe constitué par -O-C(O)-, -(O)C-O-, -NH-C(O)-, -(O)C-NH-, -($CH_3$)N-C(O)-, -(O)C-N($CH_3$)-, -S($O_2$)-O-, -O-S($O_2$)-, -S($O_2$)-NH-, -NH-S($O_2$)-, -S($O_2$)-N($CH_3$)-, -N($CH_3$)-S($O_2$)-, un radical hydrocarboné aliphatique linéaire ou ramifié ou cycloaliphatique ayant de 1 à 30 atomes de carbone, comportant éventuellement des doubles liaisons, fonctionnalisé en bout de chaîne par OH, OR', $NH_2$, N(H)R', N(R')$_2$ (où R' représente un radical alkyle en $C_1$-$C_{30}$ comportant éventuellement des doubles liaisons) ou un polyéther de structure séquencée ou statistique, constitué à base de -($R^5$-O)$_n$-$R^6$,

$R^5$ représentant un radical hydrocarboné contenant de 2 à 4 atomes de carbone,
n vaut de 1 à 100, et
$R^6$ représente un atome d'hydrogène, un radical hydrocarboné aliphatique linéaire ou ramifié ayant de 1 à 30 atomes de carbone, comportant éventuellement des doubles liaisons, un radical hydrocarboné cycloaliphatique ayant de 5 à 40 atomes de carbone, comportant éventuellement des doubles liaisons, un radical hydrocarboné aromatique ayant de 6 à 40 atomes de carbone, un radical alkylaryle ayant de 7 à 40 atomes de carbone ou un radical -C(O)-$R^7$ où

$R^7$ représente un radical hydrocarboné aliphatique linéaire ou ramifié ayant de 1 à 30 atomes de carbone, comportant éventuellement des doubles liaisons, un radical hydrocarboné cycloaliphatique ayant de 5 à 4 0 atomes de carbone, comportant éventuellement des doubles liaisons, un radical hydrocarboné aromatique ayant de 6 à 40 atomes de carbone, un radical alkylaryle ayant de 7 à 40 atomes de carbone.

8. Utilisation selon au moins l'une des revendications 4 à 7, **caractérisée en ce que** les liquides ioniques contiennent un anion choisi dans le groupe constitué par les halogénures, un bis(perfluoroalkylsulfonyl)amide ou -imide comme par exemple le bis(trifluorométhylsulfonyl)imide, les alkyl- et aryltosylates, les perfluoroalkyltosylates, le nitrate, le sulfate, l'hydrogénosulfate, les alkyl- et arylsulfates, les polyéthersulfates et -sulfonates, les perfluoroalkylsulfates, le sulfonate, les alkyl- et arylsulfonates, les alkyl- et arylsulfonates perfluorés, les alkyl- et arylcarboxylates, les perfluoroalkylcarboxylates, le perchlorate, le tétrachloroaluminate, le saccharinate, de préférence contiennent les anions des composés thiocyanate, isothiocyanate, dicyanamide, tétraphénylborate, tétrakis(pentafluorophényl)-borate, tétrafluoroborate, hexafluorophosphate, phosphate et polyétherphosphates.

9. Utilisation selon au moins l'une des revendications 1 à 8, **caractérisée en ce que** les liquides ioniques contiennent un cation choisi parmi les composés de formules générales (1) et/ou (7) et un anion dicyanamide, thiocyanate, isothiocyanate, hexafluorophosphate.

10. Utilisation selon au moins l'une des revendications 1 à 9, **caractérisée en ce qu'**on utilise des mélanges de deux ou plus de deux liquides ioniques constitués de cations des formules générales (1) à (8), combinés chacun avec au moins un anion.

11. Utilisation selon au moins l'une des revendications 1 à 10, **caractérisée en ce qu'**en tant que sels conducteurs, ces liquides ioniques contiennent au moins un sel choisi dans le groupe des sels, en particulier de métaux alcalins, avec les anions bis (perfluoroalkylsulfonyl)amide ou -imide tels que le bis(trifluorométhylsulfonyl)-imide, alkyl- et aryltosylates, perfluoroalkyltosylates, nitrate, sulfate, hydrogénosulfate, alkyl- et arylsulfates, polyéthersulfates et -sulfonates, perfluoroalkylsulfates, sulfonate, alkyl- et arylsulfonates, alkyl- et arylsulfonates perfluorés, alkyl- et arylcarboxylates, perfluoroalkylcarboxylates, perchlorate, tétrachloroaluminate, saccharinate, thiocyanate, isothiocyanate, dicyanamide, tétraphénylborate, tétrakis (pentafluorophényl) borate, tétrafluoroborate, hexafluorophosphate, phosphate et polyétherphosphates.

Abbildung 1:

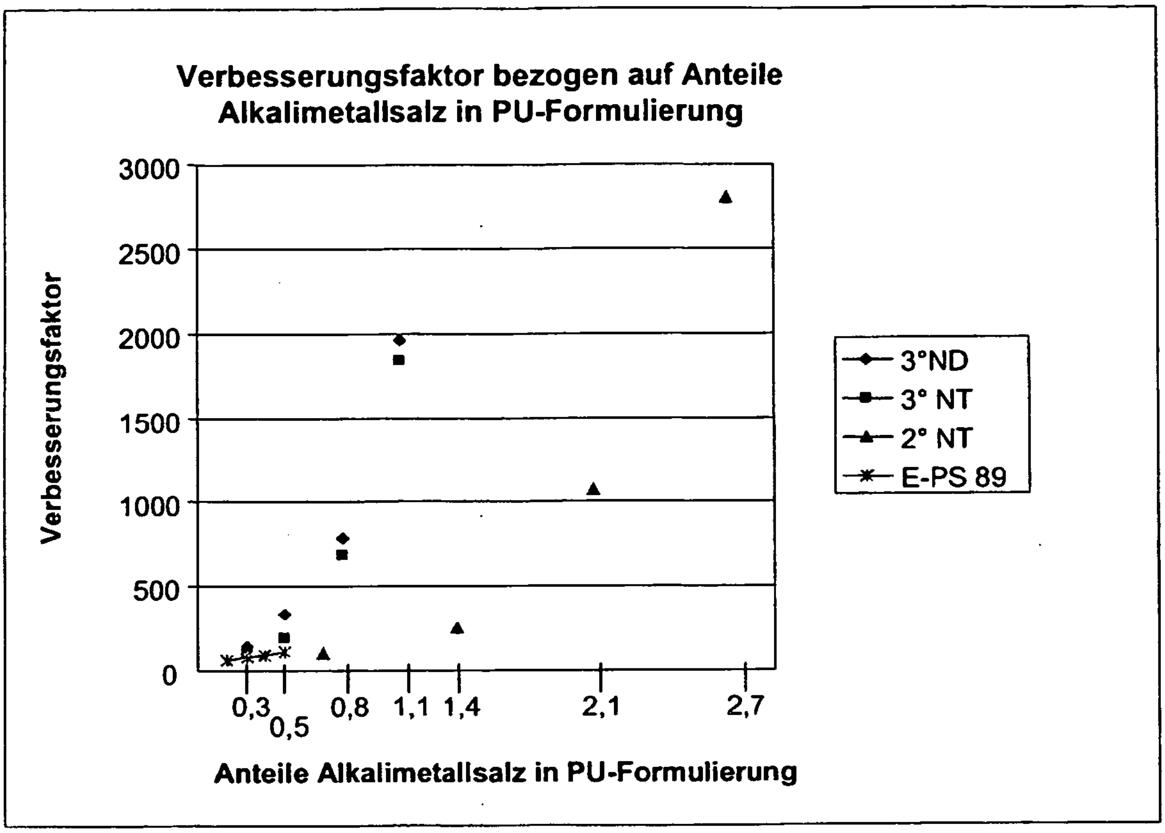
Verbesserungsfaktor bezogen auf Anteile Alkalimetallsalz in PU-Formulierung
Verbesserungsfaktor
3000
2500
2000
1500
1000
500
0
0,3
0,5
0,8
1,1
1,4
2,1
2,7
Anteile Alkalimetallsalz in PU-Formulierung
3°ND
3° NT
2° NT
E-PS 89

Abbildung 2:

| Mischung | Anteil Alkalimetallsalz (Antistatikformulierung)/Verbesserungsfaktor | | | |
|---|---|---|---|---|
| —◆— 3° ND | 0,273<br>(2)/138 | 0,544<br>(4)/328 | 0,82<br>6)/782 | 1,09<br>(8)/1952 |
| —■— 3° NT | 0,265<br>(2)/105 | 0,53<br>(4)/192 | 0,8<br>(6)/684 | 1,06<br>(8)/1839 |
| —▲— 2° NT | 0,7<br>(2)/96 | 1,4<br>(4)/251 | 2,1<br>(6)/1078 | 2,8<br>(8)/2802 |
| —✱— EP-S 89 | 0,2<br>(2,86)/62 | 0,264<br>(3,77)/81 | 0,4<br>(5,7)/90 | 0,5<br>(7,4)/110 |

Abbildung 3:

**Relativer Verbesserungsfaktor $VbF_{rel.}$(pro 0,1 Anteile Alkalimetallsalz) bei Zugabe von insgesamt 2, 4, 6 und 8 Anteile Antistatikformulierung zur PU-Formulierung**

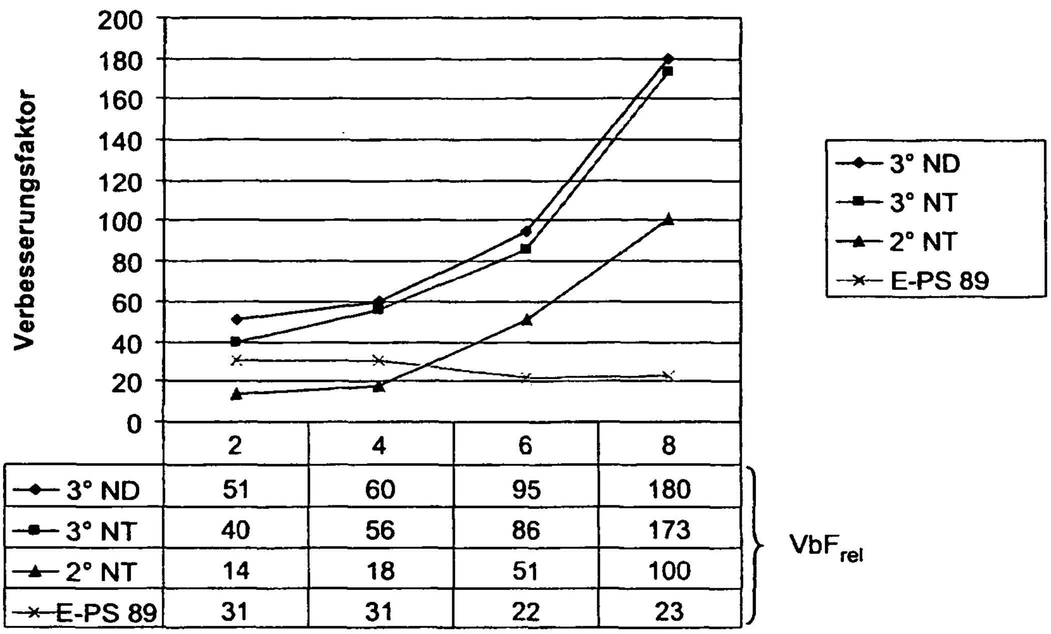


| | 2 | 4 | 6 | 8 |
|---|---|---|---|---|
| 3° ND | 51 | 60 | 95 | 180 |
| 3° NT | 40 | 56 | 86 | 173 |
| 2° NT | 14 | 18 | 51 | 100 |
| E-PS 89 | 31 | 31 | 22 | 23 |

} $VbF_{rel}$

**Anteil Antistatikformulierung in der PU-Formulierung**

$$VbF_{rel} = \frac{\text{Absoluter Verbesserungsfaktor}}{\text{(Anteile Alkalimetallsalz/0,1)}}$$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **K.R. Seddon.** *J. Chem. Technol. Biotechnol.,* 1997, vol. 68, 351-356